# EUROPÄISCHE PATENTSCHRIFT

(11) **EP 1 595 910 B1**
(45) Veröffentlichungstag und Bekanntmachung des Hinweises auf die Patenterteilung: **30.05.2007**
(21) Anmeldenummer: 05008490.4
(22) Anmeldetag: 19.04.2005
(51) Int. Cl.: C08G 77/388

(54) **Derivatisierte, permanent quaternierte Stickstoffatome aufweisende, geradkettige oder verzweigte aminofunktionelle Organopolysiloxane**
Derivatised, permanently quaternised nitrogen atoms bearing, linear or branched aminofunctional organopolysiloxanes
Dérivés d'organopolysiloxanes linéaires ou ramifiés à fonctions amines, présentant des groupements amines quaternaires permanents

(30) Priorität: 14.05.2004 DE 102004025131
(43) Veröffentlichungstag der Anmeldung: 16.11.2005
(73) Patentinhaber: Schill + Seilacher "Struktol" Aktiengesellschaft, 22113 Hamburg (DE)
(72) Erfinder: Spitzner, Harmut, Dr., 01612 Roda (DE); Just, Berthold, Dr., 22397 Hamburg (DE); Twardawa, Elke, 01159 Dresden (DE); Thümmler, Gisela, 01259 Dresden (DE)
(74) Vertreter: UEXKÜLL & STOLBERG

(56) Entgegenhaltungen:
- EP-A- 1 303 557
- DE-A1- 10 036 533
- DE-A1- 10 036 694

## Beschreibung

Die Erfindung betrifft neue derivatisierte, permanent quaternierte Stickstoffatome aufweisende, geradkettige oder verzweigte aminofunktionelle Organopolysiloxane, Verfahren zu deren Herstellung und die Verwendung dieser Organopolysiloxane als Textilweichmacher, zur Behandlung von Fasern, Celluloseprodukten und in kosmetischen Zubereitungen und insbesondere als waschfeste hydrophile Textilweichmacher.

Permanent quaternierte Stickstoffatome tragende Polysiloxane sind aus der Literatur an sich bekannt. Die DE-A-37 05 121 offenbart polyquaternäre Polysiloxanpolymere mit sich wiederholenden Einheiten AB, so dass blockartige Polymere (AB)ₙA resultieren, die durch Umsetzung von α,ω-Epoxysiloxanen mit ditertiären Diaminen in Gegenwart von Säuren bei Temperaturen von 40-120°C erhalten werden. Weiterhin wird die Verwendung der beschriebenen polyquaternären Polysiloxanpolymere in kosmetischen Zubereitungen, insbesondere in Zubereitungen zur Pflege der Haare beschrieben. Die WO-A-01/41719 und WO-A-01/41720 beschreiben die Verwendung dieser polyquaternären Polysiloxanpolymere in kosmetischen Zusammensetzungen in Kombination mit weiteren typischen Bestandteilen solcher Formulierungen und mit kationischen Polymeren. Durch die Verwendung dieser Siloxane wird eine verbesserte Kämmbarkeit, ein antistatischer Effekt, Glanz und eine verbesserte Auswaschbeständigkeit der Produkte aus Haaren erreicht. Die WO-A-02/10259 lehrt jedoch, dass die beschriebene Waschbeständigkeit sich auf den kurzzeitigen Angriff von vornehmlich Wasser und sehr milden, die Haut nicht irritierenden Tensiden bezieht, während waschfeste, hydrophile Textilweichmacher in Waschvorgängen dem Angriff konzentrierter Tensidlösungen mit hohem Fett- und Schmutzlösevermögen in Kombination mit stark alkalischen Komplexbildnern, oxidativ wirkenden Bleichmitteln und komplexen Enzymsystemen bei zum Teil erhöhten Temperaturen widerstehen müssen. Für diesen Einsatz sind die in der DE-A 37 05 121 beschriebenen polyquaternären Polysiloxanpolymere nicht geeignet. Für sehr hohe Werte von n ist das erreichte Molgewicht sehr stark von der Dosiergenauigkeit der Ausgangsstoffe und den Reaktionsbedingungen bei der Herstellung abhängig und somit können die Eigenschaften der polyquaternären Polysiloxanpolymere starken Schwankungen unterliegen. Ein weiterer Nachteil der in der DE-A-37 05 121 offenbarten Erfindung ist, dass ausschließlich die Herstellung von linearen, nicht aber von verzweigten oder zumindest teilweise vernetzten Siloxanpolymeren möglich ist.

Die US-A-4 533 714 und US-A-4 587 321 lehren die Verwendung von ähnlich aufgebauten polyquaternären Polysiloxanpolymeren in kosmetischen Produkten. Die Produkte können durch Umsetzung von α,ω-Halogenalkylsiloxanen mit ditertiären Diaminen oder durch Reaktion von α,ω-Dimethylaminoalkylsiloxanen mit Alkyldihalogeniden gewonnen werden. Letztere Synthese hat den Nachteil, dass zur Erzeugung des von α,ω-Dimethylaminoalkylsiloxans eine Hydrosilylierung eines α,ω-H-Siloxans mit einem Allylamin beschrieben ist, die zwar aus B. Marciniec, Comprehensive Handbook on Hydrosilylation, Pergamon Press, Oxford 1992 bekannt, aber schwierig durchzuführen ist. Neben den Nachteilen der in der DE-A-37 05 121 offengelegten Lehre, die auch für die US-A-4 533 714 in vollem Umfang zutreffen, besteht ein weiterer wesentlicher Nachteil der polyquaternären Polysiloxanpolymere aus der US-A-4 533 714 in der Verwendung von halogenierten Ausgangsstoffen für die Herstellung. Diesen Nachteil haben auch die in der WO-A-99/32539 offenbarten multikationischen Siliconpolymere zur Anwendung in der Behandlung von Geweben und in kosmetischen Formulierungen für die Haarpflege. Die Synthese der Siliconpolymere ist sehr aufwendig und beinhaltet einen Quaternisierungsschritt unter Verwendung von Alkylhalogeniden, Alkylsulfaten u.s.w., um eine pH-unabhängige Quaternierung zu erzielen. Einen solchen Reaktionsschritt beinhalten auch die in der DE-A-100 36 532 bzw. DE-A-100 36 522 offengelegten Herstellungswege von quaternierten α,ω-aminosäurefunktionalisierteri Polysiloxanen und linearen aminosäuremodifizierten polyquaternären Polysiloxanen. DE-A-196 52 524 lehrt, dass eine vollständige Reaktion mit den teilweise giftigen, mutagen und/oder krebserregend wirkenden halogenierten Verbindungen nicht immer sichergestellt ist, so dass teilweise die Gefahr einer Verunreinigung der so hergestellten quaternären Polysiloxanpolymere mit toxikologisch nicht akzeptablen Alkylhalogeniden besteht. Diesen Nachteil weist ebenso der in US-A-3 389 160 beschriebene Weg zu quaternierten Polysiloxanen auf. Hier geht man von epoxyfunktionellen Siloxanen aus, die in einem ersten Schritt mit sekundären Aminen zu Aminosiloxanen umgesetzt werden. In einem zweiten Schritt werden dann die Aminosiloxane mit Alkylhalogeniden quaterniert.

Die JP-A-10291967 legt ebenfalls einen Syntheseweg zu quaternären Siloxanen offen, der auf einer Hydrosilylierung von Diallylammoniumsalzen beruht. Die erhaltenen Verbindungen finden Verwendung aufgrund ihrer antimikrobiellen Eigenschaften. Der gewählte Syntheseweg ist sehr aufwendig.

Die DE-A-37 19 086 beschreibt diquaternäre Polysiloxane und deren Herstellung durch Umsetzung von α,ω-Epoxysiloxanen mit tertiären Aminen in Gegenwart von Säuren und deren Verwendung in kosmetischen Zubereitungen, insbesondere zur Pflege der Haare. Die DE-A-100 36 533 legt ein verbessertes Verfahren zur Herstellung der polyquaternären Polysiloxane aus der DE-A-37 05 121 und auch der diquaternären Polysiloxane aus der DE-A-37 19 086 offen, bietet jedoch hinsichtlich der Polymerstrukturen keine neuen Lösungen.

In der DE-A-38 37 811 wird die Anwendung der diquaternären Siloxane aus der DE-A-37 19 086 und auch seitenständig durch quaternäre Ammoniumgruppen substituierter Siloxane als Korrosionsinhibitoren in Kühlschmierstoffen und anderen Zubereitungen, die vornehmlich aus Wasser bestehen, beschrieben. Die DE-A-38 02 622 lehrt Mittel zum Ausrüsten von Textilfasern oder aus Textilfasern bestehender Produkte, welche 0,5 bis 80 Gew.-% eines Gemisches modifizierter Organopolysiloxane A und B im Gewichtsverhältnis A : B von 10 : 1 bis 1 : 1 enthalten, wobei das Organopolysiloxan A ein Polyethergruppen enthaltendes lineares Siloxan mit mindestens 40 Dialkylsiloxyeinheiten ist, an welches mindestens 2 Polyethergruppen eines Molgewichts von jeweils 600 bis 4000, die aus 40 bis 100 Mol-% Oxyethyleneinheiten bestehen, gebunden sind, und das Organopolysiloxan B ein diquaternäres Polysiloxan wie es in der DE-A-37 19 086 beschrieben ist, aber auch ein kammförmiges durch quaternäre Ammoniumgruppen substituiertes Siloxan sein kann. Die Anwendung dieser Mittel besteht in der Ausrüstung von Textilien und Textilfasern mit Weichmachern, die eine verbesserte Hydrophilie im Vergleich zu herkömmlichen Textilweichmachern auf Basis von aminofunktionellen Siliconen aufweisen. Ausschließlich kammförmig durch quaternäre Ammoniumgruppen substituierte Siloxane, wie sie zum Beispiel auch die DE-A-14 93 384 beschreibt, haben den Nachteil, dass die Dimethylsiloxyketten stets durch Methylsiloxygruppen unterbrochen werden, welche seitenständig quaternäre Stickstoffatome aufweisen und dadurch der typische Siliconweichgriff verloren geht. Die in der DE-A-37 19 086 beschriebenen diquaternären Polysiloxane weisen diesen Nachteil nicht auf. Es zeigte sich aber, dass derartig ausgerüstete Textilien ihren Weichgriff schon nach nur wenigen Wäschen mit üblichen Waschmitteln verlieren und somit die Permanenz der diquaternären Polysiloxane auf der Faser zu gering ist. Die DE-A-37 05 121 lehrt unter anderem, dass bei hohen Molekulargewichten in diquaternären Polysiloxanen zunehmend die Eigenschaften der Dimethylsiloxyeinheiten überwiegen, während der Einfluss der quaternären Ammoniumgruppen abnimmt. Im Hinblick auf die gewünschten anwendungstechnischen Eigenschaften ist man deshalb gezwungen, einen relativ engen Molgewichtsbereich einzuhalten, um keinen der geschilderten Nachteile überwiegen zu lassen.

Die WO-A-02/10256 beschreibt die Herstellung und Verwendung von mono- oder polyquaternierten Polysiloxanen und Aminosiloxanen durch Umsetzung von monofunktionellen Epoxy- oder Halogenalkylsiloxanen mit primären, sekundären und tertiären Aminen, wobei die monofunktionellen Siloxane durch saure Equilibrierung von trimethylsilylterminierten Siloxanen mit dimethylsiloxyreichen Verbindungen, z.B. Octamethylcyclotetrasiloxan, in Gegenwart entsprechender Mengen SiH-haltiger Siloxane und nachfolgende Hydrosilylierung mit ungesättigten Epoxiden, z.B. Allylglycidylether, oder ungesättigten Halogencarbonsäureestern, z.B. Chloressigsäureallylester, hergestellt werden. Die Equilibrierungsprodukte enthalten dabei statistisch eine SiH-Gruppe. Im Equilibrierungsgleichgewicht werden zusätzlich Produkte gebildet, die pro Molekül über keine bzw. zwei oder mehr terminale SiH-Funktionen verfügen. Die teilweise entstehenden, nicht substituierten Siloxane sind nicht für einen Einsatz in textilen Anwendungen geeignet, da sie auf Textilien während der Ausrüstung zu Siliconflecken führen können. Die erzielten Griffeigenschaften sind nicht ausreichend.

Die WO-A-02/10257 und WO-A-02/10259 beschreiben Polysiloxanpolymere, die neben quaternären Stickstoffatomen auch Polyethersequenzen im Molekül aufweisen, und deren Verwendung als waschbeständige hydrophile Weichmacher. Aufgrund des hohen organischen Anteils sinkt die Substantivität an der Faser und die Waschfestigkeit nimmt gegenüber den in der DE-A-37 05 121 dargelegten polyquaternären Polysiloxanpolymeren ab. Die damit ausgerüsteten Textilien und Fasern weisen keinen ausreichenden Weichgriff auf.

Die EP-A-1 000 959 beschreibt polyetherquatfunktionelle Polysiloxane, die Herstellung dieser Verbindungen und deren Verwendung in Zubereitungen zur Verbesserung der Oberflächeneigenschaften von Geweben und Fasern. Die beschriebenen Verbindungen werden durch gleichzeitige Hydrosilylierung von wasserstoffhaltigen Siloxanen mit Allylpolyethern und ungesättigten Epoxiden und nachfolgende Umsetzung der Epoxygruppen mit tertiären Aminen in Gegenwart einer physiologisch verträglichen Säure hergestellt. Die hergestellten Siloxane verleihen damit ausgerüsteten Fasern eine ausreichende Hydrophilie. Die EP-A-1 000 959 beschreibt sowohl seitenständig modifizierte Silicone, die, wie schon erläutert, nur über unzureichende Griffeigenschaften verfügen, als auch α,ω-modifizierte Siloxane, die aufgrund des Herstellungsprozesses ein Gemisch aus α,ω-diquaternären Siloxanen, Polyether-Quatsiloxanen und α,ω-Dipolyethersiloxanen darstellen. Die mit derartigen Stoffgemischen erzielte Substantivität auf textilen Geweben und die Waschfestigkeit der weichmachenden Ausrüstung sind zu gering.

Die US-A-4 472 566 offenbart quaternierte Polysiloxane, die aus aminomodifizierten Polysiloxanen durch Quaternierung mit Benzylchlorid gewonnen werden. In jedem Fall ist das quaternierte Stickstoffatom immer mit mindestens einem Wasserstoffatom substituiert, so dass die Quaternierung nicht dauerhaft und abhängig vom pH-Wert ist. Die WO-A-02/10255 beschreibt Ammoniumgruppen aufweisende Organosiliciumverbindungen, die durch Addition von Aminen oder Polyaminen an Epoxysilicone und nachfolgende Protonierung mit Säuren erhalten werden und deren Anwendung als Hydrophobiermittel für Textilien, Glas und als Bautenschutzmittel. Die Quaternierung ist nicht dauerhaft und abhängig vom pH-Wert. Obwohl die textile Ausrüstung mit Weichmachern in saurem Medium erfolgt, kommt es doch immer wieder vor, dass aus vorherigen Behandlungsschritten Lauge mit dem Textil in das Ausrüstungsbad verschleppt wird und es relativ schnell zu einem Anstieg des pH-Werts der Flotte kommt. Die Stabilität der Flotte wird dadurch verschlechtert. Die Emulsion der in der Lehre von der WO-A-02/10255 genannten Verbindungen kann brechen, und es besteht die Gefahr der Bildung von Störungen, wie z.B. von sogenannten Siliconflecken auf dem Textil. Aufgrund ihrer hydrophobierenden Eigenschaften sind die erhaltenen Organosiliciumverbindungen nicht zum Einsatz als hydrophile Weichmacher geeignet.

Weitere diquaternäre Polydimethylsiloxane und deren Verwendung in Haarkosmetika, sowie diese enthaltende Haarwasch- und Haarbehandlungsmittel werden in der DE-A-29 12 485 vorgestellt. Die Verbindungen teilen die für die sehr strukturähnlichen Siloxane aus der DE-A-37 19 086 beschriebenen Nachteile. Mit ihnen ausgerüstete Textilien verlieren ihren Weichgriff schon nach nur wenigen Wäschen mit üblichen Waschmitteln. Die Permanenz der diquaternären Polysiloxane auf der Faser ist zu gering.

Die US-A-4 384 130 und US-A-4 511 727 beschreiben ebenfalls quaternäre Ammoniumgruppen tragende Silicone. Die Verbindungen werden durch Veresterung von mit Hydroxyalkylgruppen substituierten quaternären Aminen mit Dicarbonsäuren oder cyclischen Dicarbonsäureanhydriden und nachfolgende Umesterung mit hydroxyalkylgruppensubstituierten Polysiloxanen erhalten. Die Herstellung der beschriebenen Produkte ist sehr aufwendig, sie sind sehr hochviskos und können als Antistatikum verwendet werden. Für einen Einsatz als Weichmacher für Textilien sind sie nicht geeignet.

Die GB-A-1 006 729 beschreibt ein Verfahren zur Herstellung quaternierter Siloxane durch Reaktion von γ-Halogenalkylsilanen und -siloxanen mit tertiären Aminen. Um akzeptable Reaktionsgeschwindigkeiten und vollständige Umsätze zu erreichen, müssen entweder lod- oder Bromalkylsilane oder -siloxane oder katalysierende Zusätze verwendet werden. Die Anwendung eines in der GB-A-1 006 729 beschriebenen quaternierten Siloxans wird in der GB-A-1 549 180 offengelegt. Quaternäre Ammonium- und tertiäre Aminogruppen enthaltende Organosiliciumverbindungen und deren Herstellung durch Umsetzung von Halogenalkylsiloxanen mit tertiären Diaminen werden in der DE-A-100 04 321 beschrieben. Nachteilig ist es, dass bei dem erfindungsgemäßen Verfahren die Aminkomponente gegenüber dem Halogenalkylsiloxan bevorzugt im Überschuss eingesetzt werden muss, um die in der GB-A-1 006 729 beschriebenen Nachteile bei der Herstellung zu überwinden. Die verwendeten tertiären Diamine sind oftmals als reizend, ätzend oder gesundheitsschädlich bei Berührung mit der Haut durch die Chemikaliengesetzgebung eingestuft, so dass Überschüsse derartiger Ausgangsstoffe in Produkten zur Ausrüstung von Textilien oder in kosmetischen Zubereitungen unvorteilhaft sind. Die EP-A-0 436 359 beschreibt durch 1,1,1,3,5,5,5-Heptamethyltrisiloxan-3-yl-gruppen substituierte quaternäre Ammoniumverbindungen, die über sehr starke tensidische Eigenschaften verfügen, aber aufgrund von zu geringen Beiträgen zum Griffverhalten nicht für den Einsatz als hydrophiler Weichmacher in der Textilausrüstung geeignet sind. Durch 1,1,1,3,5,5,5-Heptamethyltrisiloxan-3-yl-gruppen substituierte quaternäre Ammoniumverbindungen und Amine, die zusätzlich Hydroxyalkylgruppen besitzen und deren Anwendung in Kombination mit anionischen Tensiden zum Einsatz in Weichspülern bei der Textilwäsche werden in der US-A-5 026 489 beschrieben. Die Permanenz der verwendeten Verbindungen ist aufgrund ihrer stark tensidischen Eigenschaften zu gering, so dass sie sich nicht für den Einsatz in Produkten für die Erstausrüstung von Textilien eignen.

Die DE-A-196 52 524 beschreibt Emulsionen von quaternären Polydimethylsiloxanen, die aus den entsprechenden aminoalkylgruppensubstituierten Siliconen durch Quaternierung mit Toluensulfonsäuremethylester hergestellt wurden. Die erfindungsgemäßen Silicone sind seitenständig modifiziert und weisen immer noch einen zu geringen Weichgriff auf.

Weitere Textilweichmacher werden in der US-A-4 409 267 vorgestellt. Es handelt sich um Polysiloxane, die gleichzeitig Alkylgruppen, Polyethergruppen und wenigstens eine Aminogruppe, die durch Umsetzung einer an ein Si-Atom gebundenen Epoxygruppe mit einem primären oder sekundären Amin entstanden ist, tragen. Die Permanenz und Substantivität auf textilen Geweben ist zu gering und der erzielte Weichgriff nicht ausreichend. Aus diesem Grund wird diese Erfindung in der EP-A-1 116 813 weiterentwickelt. Es gelingt die Permanenz der Verbindungen zu verbessern, indem in der Formulierung statt primären oder sekundären Aminen aminoalkylsubstituierte Silane oder Silicone mit quaternären Ammoniumgruppen, wie sie die US-A-5 026 489 beschreibt, verwendet werden.

Lineare Polydialkylorganosiloxane mit Polyoxyalkylen- und aminofunktionellen Gruppen, die zusätzlich endständige Alkoxygruppen aufweisen, werden in der EP-A-1 174 469 offenbart. Die beschriebenen Siloxane finden als Haarpflegemittel, zur Behandlung von textilen Flächengebilden und in der Formulierung von tensidischen Zubereitungen Verwendung. Die Herstellung der Verbindungen erfolgt durch basische Equilibrierung von Polyethersiloxanen mit Dialkoxyaminosilanen und cyclischen Siloxanen. Die endständigen Alkoxygruppen verleihen dem Produkt sehr gute Permanenz auf Baumwollfasern. Die EP-A-0 546 231 beschreibt einen hydrophilen Textilweichmacher auf der Basis eines Polyorganosiloxans. Das erfindungsgemäße Polyorganosiloxan wird durch Umsetzung von Epoxysiloxanen mit sekundären Aminoalkoholen oder ethoxylierten Aminoalkoholen hergestellt. Der mit den in beiden Schriften offenbarten Polydiorganosiloxanen erreichbare Weichgriff ist zu gering. Die Produkte besitzen weiterhin den Nachteil, dass positive Ladungen am Stickstoffatom nur durch eine Protonierung erzeugt werden können. Wie schon dargestellt, kann die Stabilität einer an sich sauren Textilausrüstungsflotte durch eingeschleppte Alkalinität drastisch verschlechtert werden und eine Emulsion der in den Lehren genannten Verbindungen brechen.

Ein weiterer Textilweichmacher mit geringer Vergilbung und verbesserter Hydrophilie wird in der EP-A-1 081 271 vorgestellt. Der Weichmacher beruht auf reaktiven oder nichtreaktiven Aminosiliconölen, deren Aminogruppen an einem oder mehreren Stickstoffatomen mit 2,3-Epoxy-1-propanol oder anderen Epoxyalkanolen modifiziert wurden und mit weiteren Bestandteilen zum Weichmacher formuliert werden. Die erreichbare Waschfestigkeit ist, insbesondere bei Verwendung von reaktiven Aminoölen, ebenso wie die Vergilbungsstabilität und die Hydrophilie gut. Die mit der in der EP-A-1 081 271 vorgeschlagenen Problemlösung erreichbaren Griffeigenschaften können jedoch noch nicht befriedigen.

In DE-A-100 36 694 wird ein Verfahren zur Behandlung von organischen Fasern mit wässrigen Zubereitungen von aminofunktionellen Organosiliciumverbindungen die Struktureinheiten enthalten, die mindestens 2 positiv geladene Stickstoffatome aufweisen, beschrieben. Ziel der Erfindung ist es einen Weg vorzustellen, der aminofunktionelle Orgnosiliciumverbindungen wasserlöslicher macht und dadurch deren Benutzung in Jetfärbemaschinen erlaubt. Die beschriebenen aminofunktionellen Organosiliciumverbindungen werden entweder nach dem in DE-A-198 02 069 vorgestellten Verfahren oder durch Umsetzung von epoxyfunktionellen Organosiliciumverbindungen mit Di- bzw. Polyaminen erhalten. Die Protonierung der Stickstoffatome erfolgt durch Umsetzung mit Säuren und ist abhängig vom pH-Wert. Die Verbindungen sind nicht als hydrophile Weichmacher geeignet.

Eine zusammenfassende Darstellung über Struktur und Wirkung von Textilweichmachern geben P. Habereder und A. Bereck in Review of Progress in Coloration and Related Topics 2002, 32, 125-137. Klassische Textilweichmacher sind die dem Fachmann bekannten aminofunktionellen Organopolysiloxane, die, wenn sie über reaktive -OH oder -OAlkyl-Gruppen an den Kettenenden verfügen, durch Kettenverlängerung während der Lagerung dem behandelten Textil einen zunehmend weicheren und glatteren Griff, aber auch zunehmend wasserabweisende Eigenschaften verleihen. Die bislang als optimal angesehenen hydrophilen Weichmacher sind α,ω-Aminosilicone oder die in DE-A-37 19 086 beschriebenen diquaternären Polysiloxane, die unter der Voraussetzung einer optimalen Kettenlänge des Polymers einen guten Weichgriff erzeugen. Die Hydrophilie derart ausgerüsteter Textilien wird mit "Fehlstellen" des ausgebildeten Siliconfilms auf der Faser erklärt. Die Waschfestigkeit derartiger Weichgriffausrüstungen kann hingegen noch nicht befriedigen.

Es bestand somit die Aufgabe ein permanent quaternierte Stickstoffatome aufweisendes, aminofunktionelles Organopolysiloxan zu entwickeln, das hervorragend auf textilen Substraten, z.B. Geweben und Fasern, haftet und gegenüber Wäschen mit Haushalts- oder industriellen Waschmitteln eine verbesserte Beständigkeit aufweist, und den damit ausgerüsteten Textilien und Fasern einen angenehmen und weichen Griff verleiht und die Wasseraufnahme der damit ausgerüsteten Textilien und Fasern nicht vermindert oder verlangsamt. Eine weitere Aufgabe bestand darin, ein permanent quaternierte Stickstoffatome aufweisendes, aminofunktionelles Organopolysiloxan zur Verfügung zu stellen, das physiologisch verträglich ist und somit zum Einsatz in kosmetischen Formulierungen, in Reinigern und Waschmitteln insbesondere in Kombination mit anionischen Tensiden, und in Formulierungen zur Pflege harter Oberflächen geeignet ist. Eine weitere Aufgabe bestand darin, die Synthese dieses permanent quaternierte Stickstoffatome aufweisenden, aminofunktionellen Organopolysiloxans reproduzierbar und so zu gestalten, dass auf die Verwendung von toxikologisch bedenklichen Einsatzstoffen und Lösungsmitteln verzichtet werden kann.

Die Aufgabe konnte überraschend durch neue derivatisierte, permanent quaternierte Stickstoffatome aufweisende, geradkettige oder verzweigte aminofunktionelle Organopolysiloxane gelöst werden, die die folgenden Struktureinheiten enthalten:
a) mindestens eine Siloxaneinheit der allgemeinen Formel

   Rₐ(RO)_{b}U_{c}SiO_{[4-(a+b+c)]/2}

   dadurch gekennzeichnet, dass der Rest U ein organischer Rest ist, der gleich oder verschieden ist und eine oder mehrere Aminogruppen aufweist, wobei mindestens eine Aminogruppe einen Substituenten R¹ trägt, wobei R¹ gleich oder verschieden ist und der allgemeinen Formel -M-D-(M-A-M-D)ₘ-M-E entspricht,
   R gleich oder verschieden ist und einen einwertigen, gegebenenfalls halogenierten Kohlenwasserstoffrest mit 1 bis 18 Kohlenstoffatomen je Rest bedeutet,
   M gleich oder verschieden ist und ein zweiwertiger, geradkettiger, verzweigter oder cyclischer Kohlenwasserstoffrest mit mindestens 4 Kohlenstoffatomen ist, der mindestens eine Hydroxylgruppe aufweist, über eine Si-C Bindung an ein Siliciumatom gebunden ist und in der Kohlenstoffatomkette ein oder mehrere Sauerstoffatome aufweisen kann,
   E gleich oder verschieden ist und ausgewählt ist aus den Gruppen 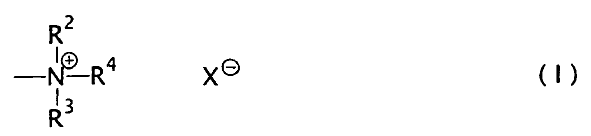 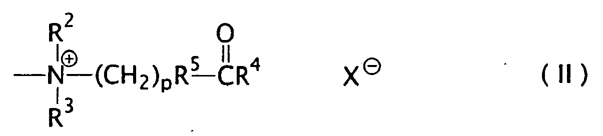 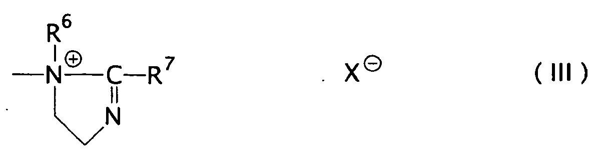 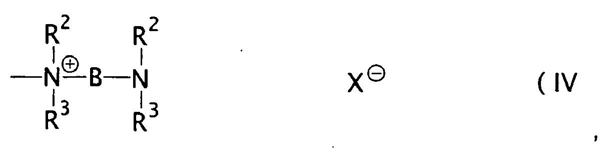 A gleich oder verschieden ist und ausgewählt ist aus den Gruppen 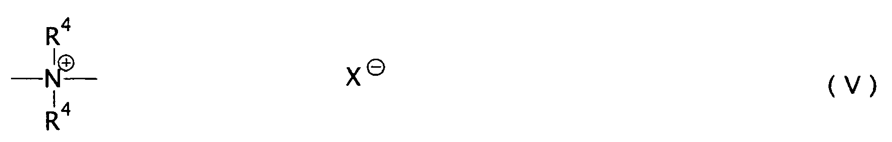 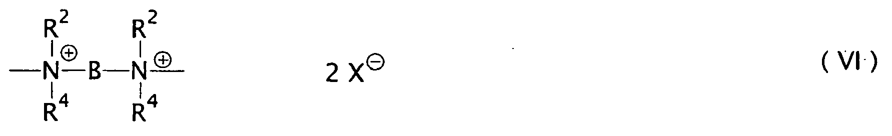 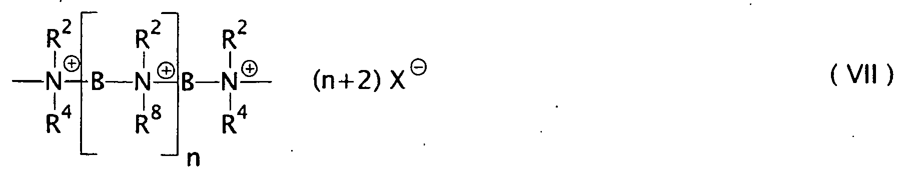 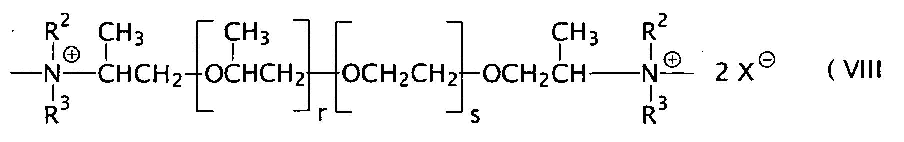 D gleich oder verschieden ist und zweiwertige Reste der allgemeinen Formel (IX) oder zweiwertige Kohlenwasserstoffreste mit 2 bis 30 Kohlenstoffatomen, die von Sauerstoffatomen unterbrochen sein können, bedeutet, wobei R wie zuvor definiert ist und mindestens ein Rest D in den Substituenten R¹ die Bedeutung der allgemeinen Formel (IX) hat, 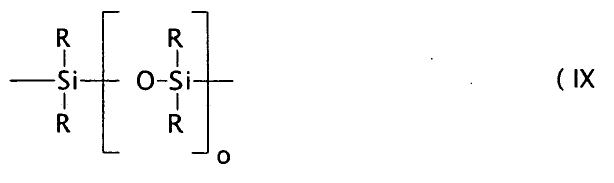 die Reste R² und R³ ein Wasserstoffatom oder gleiche oder verschiedene, einwertige Alkylreste mit 1 bis 30 Kohlenstoffatomen, Alkenylreste mit 2 bis 30 Kohlenstoffatomen, Aryl-CH₂-Reste mit 7 bis 15 Kohlenstoffatomen sind oder jeweils Bestandteil eines verbrückenden Alkylenrestes sind, wobei sowohl die Alkyl- als auch die Alkenylreste Hydroxylgruppen aufweisen können und die Alkylreste von Sauerstoffatomen oder Schwefelatomen unterbrochen sein können,
   R⁴ gleich oder verschieden ist und ein einwertiger Alkylrest mit 1 bis 30 Kohlenstoffatomen oder ein Alkenylrest mit 2 bis 30 Kohlenstoffatomen ist, wobei sowohl die Alkyl- als auch die Alkenylreste Hydroxylgruppen aufweisen können,
   R⁵ gleich oder verschieden ist und ein -Ö- oder -NR⁹-Rest ist, wobei R⁹ ein Alkyl- oder Hydroxyalkylrest mit 1 bis 4 Kohlenstoffatomen oder ein Wasserstoffatom ist,
   R⁶ und R⁷ gleiche oder verschiedene einwertige Alkylreste mit 1 bis 30 Kohlenstoffatomen sind, wobei die Alkylreste Hydroxylgruppen aufweisen können,
   R⁸ die Bedeutung des Restes R⁴ hat oder ein Rest M-D-(M-A-M-D)ₘ-M-E ist,
   B ein zweiwertiger Kohlenwasserstoffrest mit mindestens 2 Kohlenstoffatomen ist, der eine Hydroxylgruppe aufweisen und in der Kohlenstoffkette ein oder mehrere Sauerstoff- oder Stickstoffatome aufweisen kann,
   X⁻ ein organisches oder anorganisches Anion ist,
   a gleich 0, 1, 2 oder 3 ist,
   b gleich 0, 1, 2 oder 3 ist,
   c gleich 1, 2 oder 3 ist,
   mit der Maßgabe, dass die Summe a+b+c ≤3 ist,
   m eine Zahl von 0 bis 50 ist,
   n eine Zahl von 1 bis 10,
   o eine Zahl von 1 bis 250,
   p eine Zahl von 2 bis 8,
   r eine Zahl von 0 bis 100, und
   s eine Zahl von 0 bis 100 ist, und
b) mindestens eine Siloxaneinheit der allgemeinen Formel

   Rₐ(RO)_{b}SiO_{[4-(a+b)]/2}
wobei R, a und b die oben angegebene Bedeutung haben, mit der Maßgabe, dass die Summe a + b ≤ 3 ist.

Dadurch, dass mindestens ein Rest R¹ in der Siloxaneinheit der allgemeinen Formel Rₐ(RO)_{b}U_{c}SiO_{[4-(a+b+c)]/2} die Bedeutung M-D-(M-A-M-D)ₘ-M-E und mindestens ein Rest D die Bedeutung der allgemeinen Formel (IX) hat, liegt in dem Organopolysiloxan immer mindestens eine substituierte, geradkettige oder verzweigte oder gegebenenfalls cyclische Siloxankette vor, die mit (seitenständigen) organischen Resten substituiert ist, die derivatisierte Aminogruppen und mindestens eine lineare Diorganosiloxankette enthalten, die über eine Gruppe M miteinander verbunden sind. Weiterhin liegt im erfindungsgemäßen Organopolysiloxan immer mindestens ein permanent quaterniertes Stickstoffatom vor.

Ferner betriff die vorliegende Erfindung ein Verfahren zur Herstellung der erfindungsgemäßen Polyorgansiloxane wie vorstehend definiert, bei dem in geeigneten molaren Verhältnissen
a) gleiche oder verschiedene Organopolysiloxane enthaltend mindestens eine Struktureinheit der allgemeinen Formel (X)

   Rₐ(RO)_{b}U'_{c}SiO_{[4-(a+b+c)]/2} (X),

   wobei U' ein organischer Rest ist, der gleich oder verschieden ist und eine oder mehrere Aminogruppen aufweist, wobei mindestens eine der Aminogruppen einen bzw. einen weiteren Substituenten aufnehmen kann, und
   mindestens eine Struktureinheit der allgemeinen Formel (XX)

   Rₐ(RO)_{b}SiO_{[4-(a+b)]/2} (XX),

   mit
b) gleichen oder verschiedenen Organopolysiloxanen der allgemeinen Formel (XI)

   ZR₂SiO-[R₂SiO]₍ₒ₋₁₎-SiR₂Z (XI),

   und gegebenenfalls gleichen oder verschiedenen difunktionellen Epoxiden der allgemeinen Formel (XXI)

   Y-R¹²-Y (XXI),

   und mit
c) gleichen oder verschiedenen Aminen der allgemeinen Formeln (XII), (XIII), (XIV), (XV) 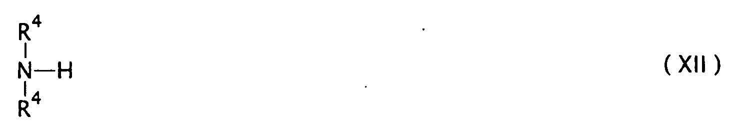 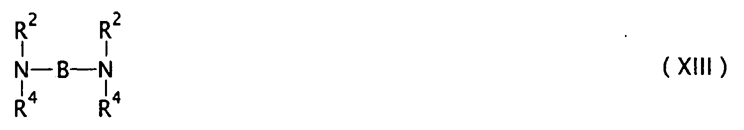 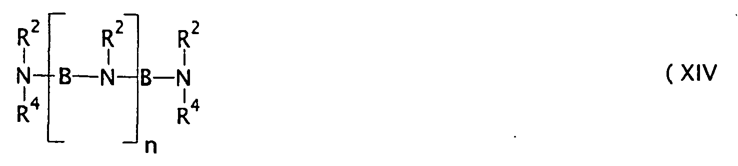 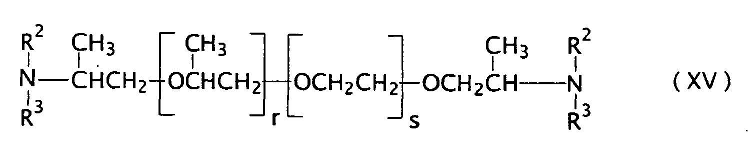 und gegebenenfalls mit
d) mindestens einem der weiteren Amine der allgemeinen Formeln (XVI), (XVII), (XVIII), (XIX) 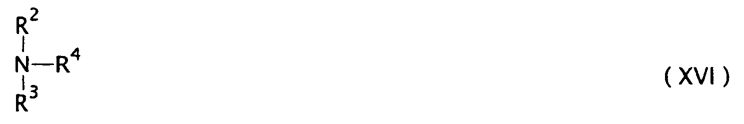 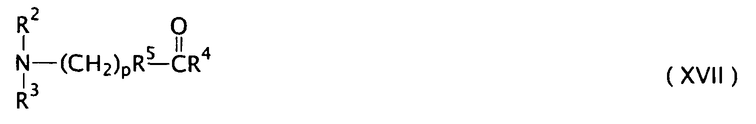 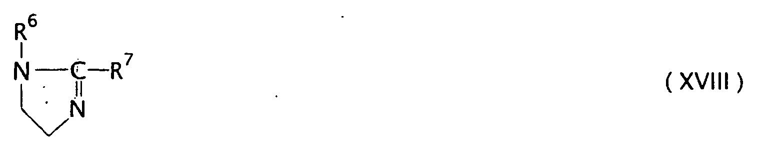 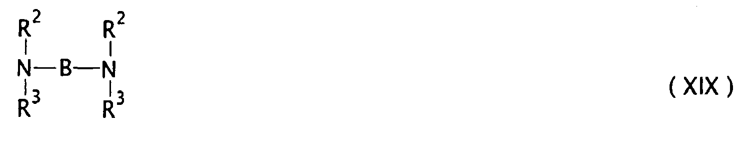 und mit
e) gleichen oder verschiedenen Säuren der allgemeinen Formel HX diskontinuierlich oder kontinuierlich, gleichzeitig oder schrittweise, umgesetzt werden, wobei
   Y gleich oder verschieden ist, und ein einwertiger Kohlenwasserstoffrest mit mindestens 3 Kohlenstoffatomen ist, der eine Epoxygruppe enthält und über ein Sauerstoffatom an R¹² gebunden sein kann,
   Z gleich oder verschieden ist, und ein einwertiger, SiC-gebundener, geradkettiger oder verzweigter Kohlenwasserstoffrest mit mindestens 4 Kohlenstoffatomen ist, der in der Kohlenstoffatomkette ein Sauerstoffatom aufweisen kann und eine Epoxygruppe enthält,
   die Reste R, R², R³, R⁴, R⁵, R⁶ und R⁷ sowie B und a, b, c, n, o, p, r und s wie vorstehend definiert sind,
   R¹² gleich oder verschieden ist und ein Sauerstoffatom oder eine geradkettige, verzweigte oder cyclische Alkylengruppe mit 2 bis 30 Kohlenstoffatomen, die gegebenenfalls durch Sauerstoffatome unterbrochen sein kann, ist,
   HX eine organische oder anorganische Säure ist.

Ein weiterer Gegenstand der Erfindung sind Zubereitungen enthaltend mindestens ein erfindungsgemäßes Organopolysiloxan wie vorstehend definiert bzw. wie nach dem vorstehend definierten Verfahren herstellbar.

Schließlich betrifft die Erfindung die Verwendung solcher Zubereitungen zur Weichgriffausrüstung von Textilien, als Prozesshilfsmittel zur Herstellung oder zur Beschichtung von natürlichen oder synthetischen Fasern, in Wasch- und Reinigungsmitteln, in Polituren und Pflegemitteln zur Behandlung harter Oberflächen, zur Beschichtung und Trocknung von Lackoberflächen von Automobilen, als Korrosionsinhibitoren und zur Haut- und Haarpflege.

Weitere Ausführungsformen der Erfindung ergeben sich aus den abhängigen Ansprüchen.

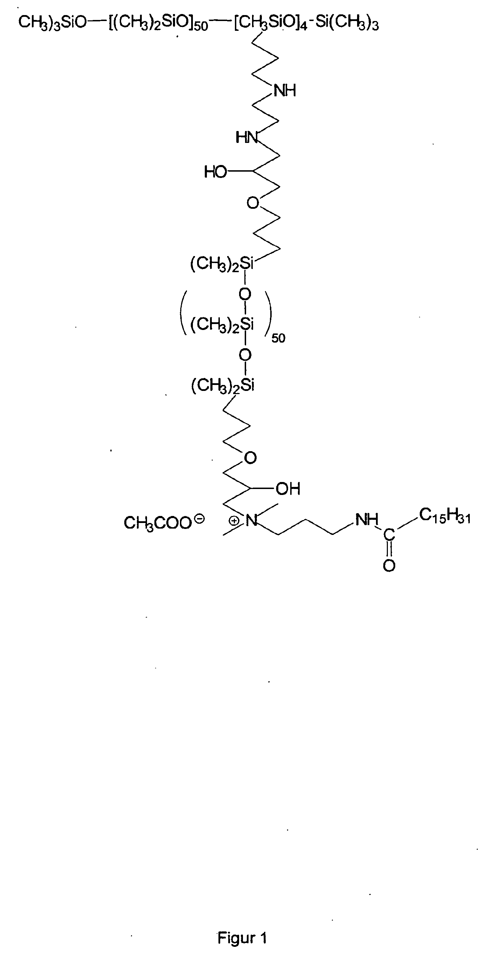

Die Figuren 1 bis 9 stellen Beispiele von erfindungsgemäßen Polyorganosiloxanen dar.

Gemäß einer Ausführungsform der vorliegenden Erfindung kann der Rest U detailliert mit der folgenden Formel

R¹ _{d}HₑR¹⁰ ₕN[C_{f}H_{2f}-R¹ _{d}HₑR¹⁰ ₕN]_{g}C_{f}H_{2f}

beschrieben werden. Die Bindung an das Siliciumatom der erfindungsgemäßen Siloxaneinheit erfolgt über die in der obigen Formel rechts stehende (Poly)-Alkyleneinheit C_{f}H_{2f}. Die Bedeutung von R¹ ist wie zuvor definiert. R¹⁰ ist ein einwertiger, gleicher oder verschiedener, geradkettiger, verzweigter oder cyclischer, gegebenenfalls halogenierter oder mit Hydroxylgruppen substituierter, gegebenenfalls von Stickstoff-, Sauerstoff- oder Schwefelatomen unterbrochener Kohlenwasserstoffrest mit 1 bis 14 Kohlenstoffatomen oder Teil eines verbrückenden, gegebenenfalls von Sauerstoff- oder Schwefelatomen unterbrochenen Alkylenrestes ist. Die Zahlenwerte der Indices d, e, h, f und g sind in der obigen Formel wie folgt:
d ist gleich 0, 1 oder 2,
e ist gleich 0, 1 oder 2,
f ist eine Zahl von 1 bis 30,
g ist eine Zahl von 0 bis 10,
h ist gleich 0, 1 oder 2,
mit der Maßgabe, dass d so gewählt ist, dass mindestens ein Rest R¹ vorhanden ist.

Soweit die Indices d, e, f, g und h mehrfach in der obigen Formel für die detaillierte Definition von Rest U auftreten, können sie jeweils gleiche oder unterschiedliche Werte annehmen. Beispielsweise sind bei der in Figur 1 gezeigten erfindungsgemäßen Verbindung bei Beschreibung des Restes U mit Hilfe der vorstehenden detaillierten Definition R¹_{d}HₑR¹⁰ₕN[C_{f}H_{2f}-R¹_{d}HₑR¹⁰ₕN]_{g}C_{f}H_{2f} die Werte der Indices wie folgt: R¹₁H₁R¹⁰₀N[C₂H₄-R¹₀H₁R¹⁰₀N]₁C₃H₆.

Die Zahl der Aminogruppen im Rest U beträgt vorzugsweise 1 bis 10, insbesondere 1 bis 3 und am meisten bevorzugt 1 oder 2.

Ein bevorzugter Gegenstand der Erfindung sind aminofunktionelle Organopolysiloxane, die dadurch gekennzeichnet sind, dass
a) in den Siloxaneinheiten der allgemeinen Formel

   Rₐ(RO)_{b}U_{c}SiO_{[4-(a+b+c)]/2}

   a, b und c so gewählt sind, dass im Mittel die Summe a+b+c ≥ 1,8 und ≤ 2,2 ist, und
b) in den Siloxaneinheiten der allgemeinen Formel

   Rₐ(RO )_{b}SiO_{[4-(a+b)]/2}

   a und b so gewählt sind, dass im Mittel die Summe a+b ≥ 1,8 und ≤ 2,2 ist.

Ferner ist bei dieser bevorzugten Ausführungsform M ausgewählt aus Kohlenwasserstoffresten der Formeln 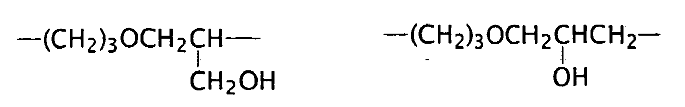 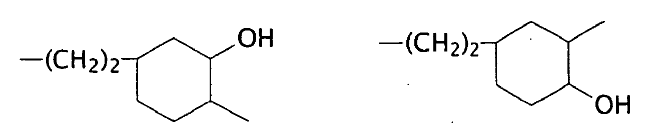 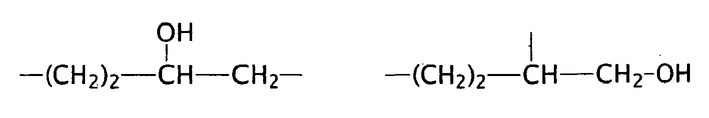 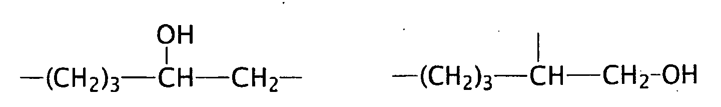 , m eine Zahl von 1 bis 10, und o eine Zahl von 20 bis 100.

Bei einer weiteren bevorzugten Ausführungsform der vorliegenden Erfindung ist zusätzlich zu den im vorhergehenden Absatz genannten Werten der Indices a, b, c m, o und den speziellen Resten M der Rest E ein gleicher oder verschiedener einwertiger Rest ausgewählt aus den Gruppen (II) und/oder (III), A ein gleicher oder verschiedener zweiwertiger Rest ausgewählt aus der Gruppe (VI), und R ein Methylrest.

Die erfindungsgemäßen derivatisierten, permanent quaternierte Stickstoffatome aufweisenden, geradkettigen oder verzweigten aminofunktionellen Organopolysiloxane haben bevorzugt eine Viskosität von 10 - 5000000 mm²/s bei 25°C, vorzugsweise eine Viskosität von 50 - 100000 mm²/s bei 25°C und besonders bevorzugt eine Viskosität von 250 - 50000 mm²/s bei 25°C, z.B. etwa 1000 - 5000, 5000 - 10000 oder 20000 - 30000 mm²/s bei 25°C, gemessen nach DIN 51562/1.

Die Reste R im erfindungsgemäßen derivatisierten, permanent quaternierte Stickstoffatome aufweisenden, geradkettigen oder verzweigten aminofunktionellen Organopolysiloxan können gleiche oder verschiedene, gegebenenfalls halogenierte Kohlenwasserstoffreste sein. Beispiele für Reste R sind Alkylreste, wie der Methyl-, Ethyl-, n-Propyl-, i-Propyl-, n-Butyl-, tert-Butyl-, i-Pentyl-, neo-Pentyl-, n-Hexyl-, n-Heptyl-, n-Octyl-, 2-Ethylhexyl-, i-Octyl-, 2,2,4-Trimethylpentyl-, n-Nonyl-, n-Decyl-, n-Dodecyl- und der Octadecylrest, Cycloalkylreste, wie der Cyclopentyl-, Cyclohexyl-, Cycloheptyl-, Methylcyclohexyl- und Cyclooctylrest, Arylreste, wie der Phenyl-, o-, m-, p-Tolyl-, Xylyl- und der Naphthylrest, Alkylarylreste, wie der Benzyl- und der Phenylethylrest, Halogenalkylreste, wie der Chlormethyl-, Chlorethyl-, n-3,3,3-Trifluorpropyl-, 2,2,2,2',2',2'-Hexafluorisopropyl- und der 3,3,4,4,5,5,6,6,7,7,8,8,8-Tridecylfluor-n-octylrest, Halogenarylreste, wie der o, m und p-Chlorphenylrest.

Bevorzugt ist R ein Methyl-, Octyl-, Phenyl- und n-3,3,3-Trifluorpropylrest. Besonders bevorzugt ist R ein Methylrest.

Der Rest R¹ kann gleich oder verschieden sein und hat die Bedeutung M-D-(M-A-M-D)ₘ-M-E, wobei mindestens ein Rest R¹ im erfindungsgemäßen Organopolysiloxan die Bedeutung M-D-(M-A-M-D)ₘ-M-E hat. Der Koeffizient m ist eine ganze Zahl und kann Werte von 0 bis 50 annehmen, wobei Werte von 1 bis 10 bevorzugt sind.

M ist ein zweiwertiger, geradkettiger oder verzweigter Kohlenwasserstoffrest mit mindestens 4 Kohlenstoffatomen, der mindestens eine Hydroxylgruppe aufweist, über eine Si-C-Bindung an ein Siliciumatom gebunden ist und in der Kohlenstoffatomkette ein Sauerstoffatom aufweisen kann. In den erfindungsgemäßen aminofunktionellen Organosiloxanen können dabei gleiche oder verschiedene Reste M verwendet werden. Beispiele für geeignete Reste M sind 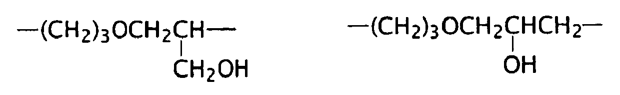 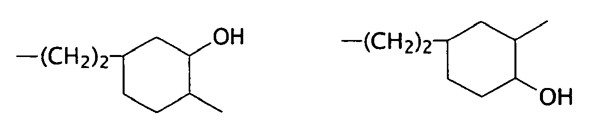 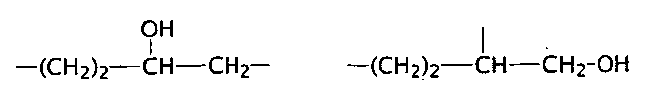 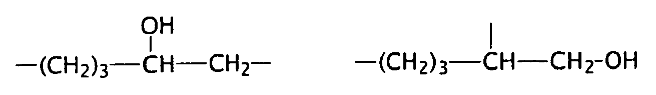 wobei die Hydroxylgruppe sich immer an einem Kohlenstoffatom in Nachbarstellung zu dem Kohlenstoffatom befindet, das an die Reste E, A oder eine Aminoalkylgruppe eines Siloxans, d.h. durch eine Einfachbindung an ein N-Atom gebunden ist. Die Hydroxyfunktion der Reste M stammt aus der Ringöffnungsreaktion einer Epoxygruppe. Die weitere Valenz des zweiwertigen Restes M ist dabei immer durch eine Einfachbindung an ein Siliciumatom bzw., gegebenenfalls, an ein Atom der Struktureinheit D gebunden. Die Reste M können dabei weiterhin auch aromatische Gruppen enthalten. Bevorzugte Reste M sind 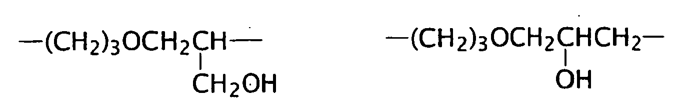 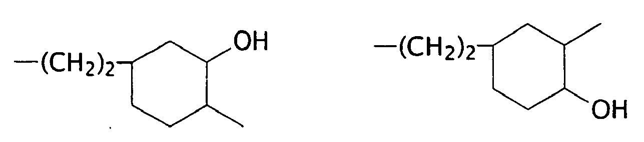 ,wobei die beiden ersten offenkettigen Reste besonders bevorzugt sind.

Die Reste E im erfindungsgemäßen derivatisierten, permanent quaternierte Stickstoffatome aufweisenden, geradkettigen oder verzweigten aminofunktionellen Organopolysiloxan sind gleiche oder verschiedene Reste ausgewählt aus den Gruppen (I), (II), (III) und (IV)

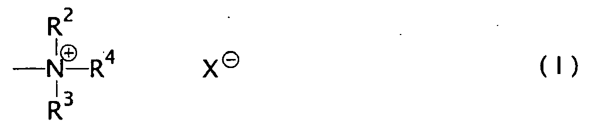

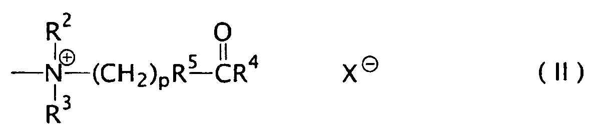

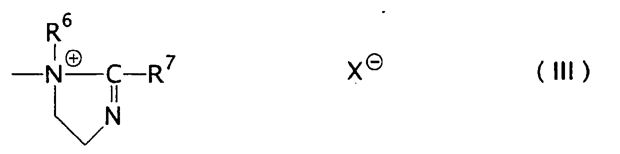

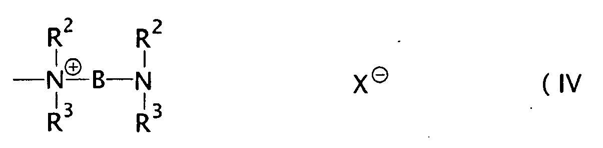

Die Reste E sind dadurch gekennzeichnet, dass sie genau ein permanent quaterniertes Stickstoffatom tragen. In den Resten E können noch weitere, nicht quaternierte Stickstoffatome vorhanden sein. Diese weiteren Stickstoffatome können wahlweise in neutraler und/oder in protonierter Form vorliegen. Das Vorliegen einer positiven Ladung an diesen weiteren Stickstoffatomen ist abhängig vom pH-Wert. Die Protonierung kann dabei durch die dem Anion X⁻ entsprechende Säure HX, aber auch durch eine beliebige andere Säure erfolgt sein.

Bevorzugte Reste E sind aus den Gruppen (I), (II) und (III) ausgewählt, besonders bevorzugte Reste E aus den Gruppen (II) und (III).

Die im Rest E enthaltenen Substituenten R² und R³ können gleich oder verschieden sein und wahlweise ein Wasserstoffatom, ein geradkettiger, verzweigter oder cyclischer Alkylrest mit 1 bis 30 Kohlenstoffatomen, wie der Methyl-, Ethyl-, n-Propyl-, i-Propyl-, n-Butyl-, tert-Butyl-, i-Pentyl-, neo-Pentyl-, n-Hexyl-, n-Heptyl-, n-Octyl-, 2-Ethylhexyl-, i-Octyl-, 2,2,4-Trimethylpentyl-, n-Nonyl-, n-Decyl-, n-Dodecyl-, Octadecyl-, C₂₄H₄₉-, Cyclopentyl-, Cyclohexyl-, Cycloheptyl-, Methylcyclohexyl- und Cyclooctylrest, ein geradkettiger, verzweigter oder cyclischer Alkenylrest mit 2 bis 30 Kohlenstoffatomen, wie der Vinyl-, Allyl-, aber auch Propagyl-, But-1-en-4-yl-, But-1-en-3-yl-, Pentenyl-, Hex-1-en-6-yl-, Hex-2-en-6-yl- und Oleylrest, ein Aryl-CH₂-Rest, wie der Benzyl-, o-, m-, p-Methylbenzylrest, aber gegebenenfalls auch ein Arylrest, wie der Phenylrest, o, m, p-Tolyl- und Xylylrest oder die Substituenten R² und R³ können Teile eines verbrückenden Alkylrests, wie Ethylen-, n-Propylen-, i-Propylen- oder n-Butylen-, i-Butylen-, Hexylen-, Octylenreste, oder Alkyl- oder Alkylenreste, die Hydroxylgruppen aufweisen, wie Hydroxyethyl- oder Hydroxypropylreste, sein. Die Substituenten R² und R³ können weiterhin Alkylreste, die von Sauerstoffatomen unterbrochen sind, wie -(C₂H₄O)ᵤR', -(C₃H₆O)ᵤR', -(C₂H₄O)ᵤ(C₃H₆O)ᵤR' und -(C₄H₈O)ᵤR', wobei u eine ganze Zahl von 1 bis 50, vorzugsweise von 1 bis 15, ist und R' ein Wasserstoffatom oder ein Kohlenwasserstoffrest mit 1 bis 8 Kohlenstoffatomen, bevorzugt Wasserstoff, ein Methyl- oder Butylrest ist, und weiterhin Alkylreste, die von Schwefelatomen unterbrochen sind, wie -(C₂H₄S)ᵤR' und -(C₃H₆S)ᵤR', wobei u und R' die oben dafür angegebene Bedeutung haben, sein. Bevorzugt sind die Substituenten R² und R³ Alkylreste mit 1 bis 8 Kohlenstoffatomen, wie der Methyl-, Ethyl- und Propylrest, Alkenylreste mit 2 bis 8 Kohlenstoffatomen, wie der Allylrest, ein Benzylrest, Bestandteil eines verbrückenden Alkylenrests mit 2 bis 9 Kohlenstoffatomen, wie Ethylen-, Propylen- oder Isophorylenrest, oder ein Hydroxylgruppen aufweisender Alkylrest mit 2 bis 3 Kohlenstoffatomen, wie der Hydroxyethyl- oder Hydroxypropylrest. Besonders bevorzugt sind die Substituenten R² und R³ Methylreste.

Der im Rest E enthaltene Substituent R⁴ kann gleich oder verschieden sein und wahlweise ein geradkettiger, verzweigter oder cyclischer Alkylrest mit 1 bis 30 Kohlenstoffatomen, wie der Methyl-, Ethyl-, n-Propyl-, i-Propyl-, n-Butyl-, tert-Butyl-, i-Pentyl-, neo-Pentyl-, n-Hexyl-, n-Heptyl-, n-Octyl-, 2-Ethylhexyl-, i-Octyl-, 2,2,4-Trimethylpentyl-, n-Nonyl-, n-Decyl-, n-Dodecyl-, Octadecyl-, C₂₄H₄₉-, Cyclopentyl-, Cyclohexyl-, Cycloheptyl-, Methylcyclohexyl- und Cyclooctylrest, ein geradkettiger, verzweigter oder cyclischer Alkenylrest mit 2 bis 30 Kohlenstoffatomen, wie der Vinyl-, Allyl-, But-1-en-4-yl-, But-1-en-3-yl-, Pentenyl-, Hex-1-en-6-yl-, Hex-2-en-6-yl- und Oleylrest, wobei sowohl Alkyl- als auch Alkenylrest durch Hydroxylgruppen substituiert sein können, wie z.B. Hydroxyethyl- oder Hydroxypropylrest.

Der im Rest E der Formel (II) enthaltene Substituent R⁵ kann gleich oder verschieden sein und wahlweise ein Sauerstoffatom, -O-, oder ein Rest der Formel -NR⁹- sein, wobei R⁹ ein Alkyl- oder Hydroxyalkylrest mit 1 bis 4 Kohlenstoffatomen, wie z.B. ein Methyl-, Ethyl-, n-Propyl-, i-Propyl-, n-Butyl-, i-Butyl-, Hydroxyethyl- oder Hydroxypropylrest, oder ein Wasserstoffatom sein. Bevorzugt ist der Rest R⁹ ein Wasserstoffatom. Der Koeffizient p im Rest E der Formel (II) ist eine Zahl von 2 bis 8, bevorzugt eine Zahl von 2 bis 6 und besonders bevorzugt eine Zahl von 2 bis 4.

Die im Rest E enthaltenen Substituenten R⁶ und R⁷ können gleich oder verschieden und Alkylreste mit 1 bis 30 Kohlenstoffatomen, wie z.B. der Methyl-, Ethyl-, n-Propyl-, i-Propyl-, n-Butyl-, tert-Butyl-, i-Pentyl-, neo-Pentyl-, n-Hexyl-, n-Heptyl-, n-Octyl-, 2-Ethylhexyl-, i-Octyl-, 2,2,4-Trimethylpentyl-, n-Nonyl-, n-Decyl-, n-Dodecyl-, Octadecyl-, C₂₄H₄₉-, Cyclopentyl-, Cyclohexyl-, Cycloheptyl-, Methylcyclohexyl- und Cyclooctylrest, wobei die Alkylreste R⁶ und R⁷ Hydroxylgruppen aufweisen können, wie z.B. der Hydroxyethyl- und der Hydroxypropylrest, sein.

Der im Rest E der Formel (IV) enthaltene Rest B ist ein zweiwertiger Kohlenwasserstoffrest mit mindestens 2 Kohlenstoffatomen, der eine Hydroxylgruppe und in der Kohlenstoffkette Sauerstoffatome oder Stickstoffatome aufweisen kann. Beispiele für Reste B sind -CH₂CH₂-, -CH₂CH₂CH₂-, -CH₂CH(CH₃)-, -CH₂CH₂CH₂CH₂-,-CH₂CH(CH₂CH₃)-, -CH₂CH₂OCH₂CH₂-, -CH₂CH₂NHCH₂CH₂-, -CH₂CH₂CH₂OCH₂CH₂CH₂-, -CH₂CH₂CH₂NR²CH₂CH₂CH₂-, - CH₂CH₂OCH₂CH₂OCH₂CH₂-, -CH₂CH₂NR²CH₂CH₂NR²CH₂CH₂-, -CH₂CH(OH)CH₂-, - CH₂CH₂CH₂(OCH₂CH₂)ᵤ(OCH₂CH(CH₃))ᵤCH₂CH₂CH₂- mit wahlweise blockartiger und statistischer Verteilung der OCH₂CH₂- und OCH₂CH(CH₃)-Gruppen, wobei u und R² die oben dafür angegebene Bedeutung haben, der Cyclohexylen- und der Isophorylenrest.

X- ist ein organisches oder anorganisches Anion, bevorzugt ein physiologisch verträgliches organisches oder anorganisches Anion. Die organischen und anorganischen Anionen können dabei sowohl ein- als auch mehrwertig sein. Beispiele für geeignete Anionen X⁻ sind Chlorid-, Sulfat-, Phosphat-, Formiat-, Acetat-, Propionat-, Octoat-, Stearat-, Maleat-, Phthalat-, Benzoat- und Adipinationen, aber auch Alkyl- und Arylsulfonate, wie z.B. Methylsulfonat, Butylsulfonat und p-Toluensulfonat.

Die Reste A im erfindungsgemäßen aminofunktionellen Organopolysiloxan sind gleiche oder verschiedene Reste ausgewählt aus den Gruppen (V), (VI), (VII) und (VIII)

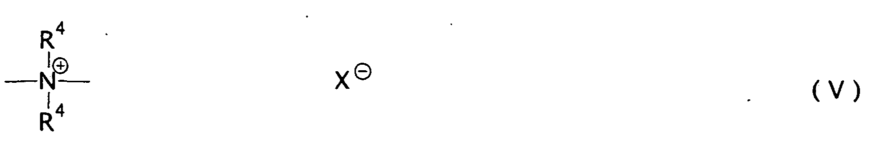

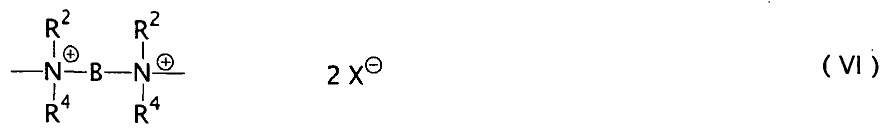

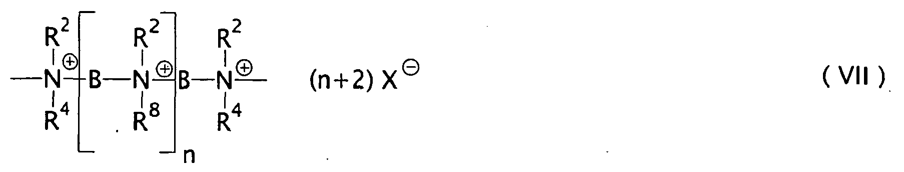

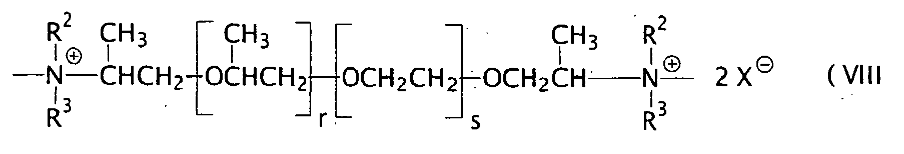

Die Reste A sind dadurch gekennzeichnet, dass sie mindestens ein permanent quaterniertes Stickstoffatom tragen und mit mindestens zwei Resten M substituiert sind. Bevorzugte Reste A sind die Reste der Formel (VI), (VII) und (VIII) und dadurch charakterisiert, dass sie mindestens zwei permanent quaternierte Stickstoffatome tragen. Besonders bevorzugte Reste A sind die Reste (VI) und (VII). In den Resten A können noch weitere, nicht quaternierte Stickstoffatome vorhanden sein. Diese weiteren Stickstoffatome können wie schon für die Reste E definiert wahlweise in neutraler und/oder in protonierter Form vorliegen. Die Protonierung kann dabei durch die dem Anion X⁻ entsprechende Säure HX, aber auch durch eine beliebige andere Säure erfolgt sein.

Die Substituenten R², R⁴ und B in den Resten A haben die oben gegebene Bedeutung.

Die Zahl n ist eine ganze Zahl und kann Werte von 1 bis 10 aufweisen.

Der im Rest A der Formel (VII) enthaltene Rest R⁸ kann gleich oder verschieden sein und die Bedeutung des Restes R⁴ oder die des Restes allgemeinen Formel -M-D-(M-A-M-D)ₘ-M-E haben, wobei die Reste M und E die oben angegebenen Bedeutungen aufweisen.

Der Substituent D ist ein gleicher oder verschiedener, zweiwertiger, linearer Diorgano(poly)siloxanrest der Formel (IX) und/oder ein gleicher oder verschiedener, zweiwertiger Kohlenwasserstoffrest mit 2 bis 30 Kohlenstoffatomen, der von Sauerstoffatomen unterbrochen sein kann, wobei mindestens ein Rest D in den Substituenten R¹ die Bedeutung der allgemeinen Formel (IX) hat. 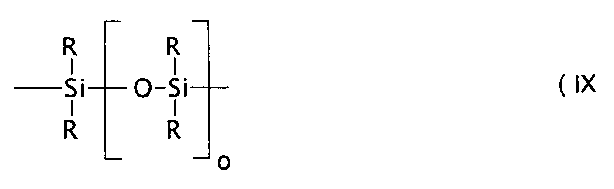 Der Substituent R in der allgemeinen Formel (IX) nimmt die oben angegebenen Bedeutung an und o ist eine ganze Zahl von 1 bis 250. Bevorzugt ist R ein Methylrest und o eine ganze Zahl von 6 bis 120 und, besonders bevorzugt von 20 bis 100.

Ist D ein gleicher oder verschiedener, zweiwertiger Kohlenwasserstoffrest, der auch von Sauerstoffatomen unterbrochen sein kann, so besteht er bevorzugt aus 2 bis 20, bevorzugt aus 4 bis 16 Kohlenstoffatomen. Weitere bevorzugte zweiwertige Kohlenwasserstoffreste tragen am Kettenanfang und am Kettenende ein Sauerstoffatom. Beispiele für geeignete zweiwertige Kohlenwasserstoffreste sind 1,4-Butylen, 1,6-Hexylen und 1,8-Dioxohexylenreste.

R¹⁰ ist ein einwertiger, gleicher oder verschiedener, geradkettiger, verzweigter oder cyclischer, gegebenenfalls halogenierter oder mit Hydroxylgruppen substituierter, gegebenenfalls von Stickstoff-, Sauerstoff- oder Schwefelatomen unterbrochener Kohlenwasserstoffrest mit 1 bis 14 Kohlenstoffatomen oder Teil eines verbrückenden, gegebenenfalls von Sauerstoff- oder Schwefelatomen unterbrochenen Alkylenrestes. Geeignete Reste R¹⁰ sind z.B. Methyl-, Ethyl-, Propyl-, Butyl-, Cyclopentyl-, Cyclohexyl-, Trifluorpropyl- und Octyl, aber auch Hydroxyethyl- oder Hydroxypropyl-, oder auch mit Ethylenoxid, Propylenoxid oder Butylenoxid alkoxylierte Hydroxyethyl- oder Hydroxypropylreste. Weiterhin kann R¹⁰ z.B. Teil eines Pyrimidin-, eines Imidazolin- oder eines Morpholinrests sein.

Die Koeffizienten a und b können Werte von 0, 1, 2 oder 3 annehmen. Der Koeffizient c ist gleich 1, 2 oder 3. Die Summe der Koeffizienten a+b+c in den Siloxaneinheiten der allgemeinen Formel
a)

   Rₐ(RO)_{b}U_{c}SiO_{[4-(a+b+c)]/2}
ist dabei kleiner oder gleich 3, so dass der Term [4-(a+b+c)]/2 Werte zwischen 0,5 und 1,5 annimmt. Bevorzugt ist die Summe a+b+c im Mittel größer oder gleich 1,8 und kleiner oder gleich 2,2, so dass der Term [4-(a+b+c)]/2 Werte zwischen 0,9 und 1,1 annimmt. Besonders bevorzugt ist die Summe a+b+c im Mittel größer oder gleich 1,9 und kleiner oder gleich 2,1, so dass der Term [4-(a+b+c)]/2 Werte zwischen 0,95 und 1,05 annimmt.

Die Summe der Koeffizienten a+b in den Siloxaneinheiten der allgemeinen Formel
b)

   Rₐ(RO)_{b}SiO_{[4-(a+b)]/2}
ist dabei kleiner oder gleich 3, so dass der Term [4-(a+b)]/2 Werte zwischen 0,5 und 2,0 annimmt. Bevorzugt ist die Summe a+b im Mittel größer oder gleich 1,8 und kleiner oder gleich 2,2, so dass der Term [4-(a+b)]/2 Werte zwischen 0,9 und 1,1 annimmt. Besonders bevorzugt ist die Summe a+b im Mittel größer oder gleich 1,9 und kleiner oder gleich 2,1, so dass der Term [4-(a+b)]/2 Werte zwischen 0,95 und 1,05 annimmt.

Die erfindungsgemäßen Organopolysiloxane können somit sowohl eine verzweigte als auch eine geradkettige Struktur aufweisen. Bevorzugte erfindungsgemäße derivatisierte, permanent quaternierte Stickstoffatome aufweisende, aminofunktionelle Organopolysiloxane weisen eine im Wesentlichen geradkettige Struktur auf.

Die erfindungsgemäßen Organopolysiloxane enthalten bevorzugt weniger Siloxaneinheiten der allgemeinen Formel Rₐ(RO)_{b}U_{c}SiO_{[4-(a+b+c)]/2} im Vergleich zur Anzahl der Siloxaneinheiten der allgemeinen Formel Rₐ(RO)_{b}SiO_{[4-(a+b)]/2}, z.B. 20 bis 1000 Siloxaneinheiten der allgemeinen Formel Rₐ(RO)_{b}SiO_{[4-(a+b)]/2} und 1 bis 19 Siloxaneinheiten der allgemeinen Formel Rₐ(RO)_{b}U_{c}SiO_{[4-(a+b+c)]/2} bzw. 100 bis 400 Siloxaneinheiten der allgemeinen Formel Rₐ(RO)_{b}SiO_{[4-(a+b)]/2} und 1 bis 10 Siloxaneinheiten der allgemeinen Formel Rₐ(RO)_{b}U_{c}SiO_{[4-(a+b+c)]/2}.

Der Koeffizient b kann in allen Siloxaneinheiten des aminofunktionellen Organopolysiloxans den Wert 0 annehmen. Bevorzugt hat der Koeffizient b in den erfindungsgemäßen aminofunktionellen Organopolysiloxanen einen Wert von mindestens 2 bezogen auf das Gesamtmolekül, d.h. es liegen im Organopolysiloxan mindestens 2 Alkoxysilylgruppen vor.

In der detaillierten Definition R¹_{d}HₑR¹⁰ₕN[C_{f}H_{2f}-R¹_{d}HₑR¹⁰ₕN]_{g}C_{f}H_{2f} des Restes U kann d die Werte 0, 1 oder 2 haben, wobei d mindestens in einer Siloxaneinheit den Wert 1 oder 2 hat, so dass mindestens ein Substituent R¹ in den erfindungsgemäßen aminofunktionellen Organopolysiloxanen vorliegt, wobei mindestens ein Rest R¹ die Bedeutung M-D-(M-A-M-D)ₘ-M-E hat.

Der Koeffizient e kann den Wert 0, 1 oder 2 aufweisen und ist vorzugsweise 1.

Der Koeffizient f in der detaillierten Definition des Restes U ist eine Zahl von 1 bis 30, d.h. die Struktureinheit C_{f}H_{2f} ist eine difunktionelle, verzweigte oder geradkettige Alkyleneinheit mit 1 bis 30 C-Atomen. Bevorzugt nimmt f Werte von 2 bis 4 ein und ist zum Beispiel eine Ethylen, eine Propylen- oder eine Isobutyleneinheit. Die Struktureinheit C_{f}H_{2f} kann dabei in einer Siloxaneinheit der allgemeinen Formel Rₐ(RO)_{b(}[R¹_{d}HₑR¹⁰ₕN[C_{f}H_{2f}-R¹_{d}HₑR¹⁰ₕN]_{g}C_{f}H_{2f})_{c}SiO_{[4-(a+b+c)]/2} gleich oder verschieden sein.

Der Koeffizient g kann eine Zahl von 0 bis 10 sein. Bevorzugt ist g 0 oder 1. Der Koeffizient h kann gleich 0, 1 oder 2 sein.

Die Koeffizienten r und s in den Resten A der Formel (VIII) sind Zahlen von 0 bis 100, und bevorzugt Zahlen von 0 bis 50. Besonders bevorzugt sind r und s Zahlen von 0 bis 50 und die Summe von r+s hat einen Wert von 0 bis 50.

Eine weitere Ausführungsform der erfindungsgemäßen Organopolysiloxane ist dadurch gekennzeichnet, dass mindestens ein Substituent R¹ die Bedeutung -M-D-(M-A-M-D)ₘ-M-E hat und neben dem Substituenten der allgemeinen Formel -M-D-(M-A-M-D)ₘ-M-E weitere Substituenten die Bedeutung der allgemeinen Formeln -M-SiRₜ(OR¹¹)₍₃₋ₜ₎ oder -M-D-(M-A-M-D)ₘ-M-A-M-SiRₜ(OR¹¹)₍₃₋ₜ₎ haben, wobei M, D, A, m und R wie oben definiert sind, R¹¹ ein einwertiger, geradkettiger oder verzweigter Alkylrest mit 1 bis 10 Kohlenstoffatomen und t = 0, 1 oder 2 ist. Beispiele für Reste R¹¹ sind Methyl-, Ethyl-, n-Propyl-, i-Propyl-, n-Butyl-, n-Hexyl-, 2-Ethylbutyl-, Octyl-, 2-Ethylhexyl- und Decylreste. Bevorzugte Reste R¹¹ sind Ethyl- und Methylreste. Der Koeffizient t hat bevorzugt den Wert 0.

Bei einer weiteren Aufführungsform des erfindungsgemäßen Verfahrens zur Herstellung eines erfindungsgemäßen Organopolysiloxans, nimmt in einem geeigneten molaren Verhältnis die monomere Siliciumverbindung Z-SiRₜ(OR¹¹)₍₃₋ₜ₎ an der Reaktion teil, wobei R¹¹ ein einwertiger, geradkettiger oder verzweigter Alkylrest mit 1 bis 10 Kohlenstoffatomen ist, der gleich oder verschieden sein kann, t = 0, 1 oder 2 ist, und Z gleich oder verschieden ist und ein einwertiger, SiC-gebundener, geradkettiger oder verzweigter Kohlenwasserstoffrest mit mindestens 4 Kohlenstoffatomen ist, der in der Kohlenstoffatomkette ein Sauerstoffatom aufweisen kann und eine Epoxygruppe enthält. So werden Organopolysiloxane wie im vorstehenden Absatz definiert erhalten.

Die im erfindungsgemäßen Herstellungsverfahren verwendeten gleichen oder verschiedenen Organopolysiloxane enthalten Struktureinheiten der allgemeinen Formel (X)

Rₐ(RO)_{b}U'_{c}SiO_{[4-(a+b+c)]/2} (X),

und Struktureinheiten der allgemeinen Formel (XX)

Rₐ(RO)_{b}SiO_{[4-(a+b)]/2} (XX)

sind insbesondere dadurch gekennzeichnet, dass die Summe der Koeffizienten a+b+c in den Siloxaneinheiten der allgemeinen Formel (X) kleiner oder gleich 3, so dass der Term [4-(a+b+c)]/2 Werte zwischen 0,5 und 1,5 annimmt. Bevorzugt ist die Summe a+b+c im Mittel größer oder gleich 1,8 und kleiner oder gleich 2,2, so dass der Term [4-(a+b+c)]/2 Werte zwischen 0,9 und 1,1 annimmt und besonders bevorzugt ist die Summe a+b+c im Mittel größer oder gleich 1,9 und kleiner oder gleich 2,1, so dass der Term [4-(a+b+c)]/2 Werte zwischen 0,95 und 1,05 annimmt.

Die Summe der Koeffizienten a+b in den Siloxaneinheiten der allgemeinen Formel (XX) ist kleiner oder gleich 3, so dass der Term [4-(a+b)]/2 Werte zwischen 0,5 und 2,0 annimmt. Bevorzugt ist die Summe a+b im Mittel größer oder gleich 1,8 und kleiner oder gleich 2,2, so dass der Term [4-(a+b)]/2 Werte zwischen 0,9 und 1,1 annimmt und besonders bevorzugt ist die Summe a+b im Mittel größer oder gleich 1,9 und kleiner oder gleich 2,1, so dass der Term [4-(a+b)]/2 Werte zwischen 0,95 und 1,05 annimmt.

Der Koeffizient b kann in den Siloxaneinheiten (X) und (XX) des Organopolysiloxans den Wert 0 annehmen. Bevorzugt hat der Koeffizient b einen Wert von mindestens 2 bezogen auf das Gesamtmolekül, d.h. es liegen im Organopolysiloxan mindestens 2 Alkoxysilylgruppen vor.

Bevorzugte Reste U' in den Struktureinheiten der Formel (X) sind 3-Aminopropyl-, 3-(Aminoethyl)aminopropyl-, 3-(Aminoethyl)aminoisobutyl- und 3-N-Cyclohexylaminopropylreste. Derartige Organopolysiloxane sind aus P. Habereder und A. Bereck in Review of Progress in Coloration and Related Topics 2002, 32, Seite125-137 bekannt und kommerziell in großer Vielfalt erhältlich.

Die im erfindungsgemäßen Herstellungsverfahren verwendeten gleichen oder verschiedenen Organopolysiloxane der allgemeinen Formel (XI) enthaltenen Reste Z sind bevorzugt 3,4-Epoxybutyl-, 4,5-Epoxypentyl-, 5,6-Epoxyhexyl-, 7,8-Epoxyoctyl-, Glycidoxyethyl-, Glycidoxypropyl-, Glycidoxybutyl- sowie 2-(3,4-Epoxycyclohexyl)ethylreste. Die Organopolysiloxane der allgemeinen Formeln (XI) enthalten pro Molekül zwei Epoxygruppen und sind somit α,ω-Diepoxypolysiloxane mit 2 bis 251 Diorganosiloxyeinheiten und haben Viskositäten von 1 bis 1000 mm²/s, bevorzugt 5 bis 500 mm²/s, insbesondere 10 bis 100 mm²/s bei 25°C. Derartige Organopolysiloxane sind dem Fachmann bekannt und kommerziell verfügbar. Ein geeignetes Verfahren zur Herstellung der Organopolysiloxane der allgemeinen Formeln (XI) ist z.B. die übergangsmetallkatalysierte Hydrosilylierung von endständig ungesättigten Epoxyverbindungen mit Si-H-Gruppen in α- und ω-Position enthaltenden Organopolysiloxanen. Beispiele für geeignete endständig ungesättigte Epoxyverbindungen sind 3,4-Epoxybut-1-en, Glycidoxyallylether und 4-Vinylcyclohexenoxid. Ein weiteres Verfahren zu Herstellung derartiger Organopolysiloxane besteht in der Epoxidierung von C=C-Doppelbindungen tragenden Organopolysiloxanen.

Im Verfahren zur Herstellung der erfindungsgemäßen aminofunktionellen Organopolysiloxane können gegebenenfalls auch gleiche oder verschiedene difunktionelle Epoxide der allgemeinen Formel (XXI)

Y-R¹²-Y (XXI)

verwendet werden. Ein bevorzugter Rest Y ist der 1,2-Epoxypropyloxyrest. R¹² ist bevorzugt eine geradkettige Alkylengruppe mit 2 bis 6 Kohlenstoffatomen, z.B. Ethylen, Propylen, Butylen oder Hexylen. Beispiele für derartige difunktionelle Epoxide sind Ethylenglycoldiglycidylether und Hexandioldiglycidylether. Derartige difunktionelle Epoxide der allgemeinen Formel (XXI) sind dem Fachmann bekannt und kommerziell erhältlich. Weiterhin ist es möglich neben den epoxyfunktionellen Organopolysiloxanen der allgemeinen Formel (XI) und den difunktionellen Epoxiden der allgemeinen Formel (XXI) monofunktionelle Epoxyverbindungen der Struktur Y-NR₃⁺ + + X⁻ einzusetzen, z.B. Glycidyltrimethylammoniumchlorid.

Die Amine der allgemeinen Formeln (XII), (XIII), (XIV) und (XV) weisen mindestens ein primäres, bevorzugt mindestens ein sekundäres, oder, weiter bevorzugt, mindestens zwei sekundäre, oder mindestens ein sekundäres und ein tertiäres oder, besonders bevorzugt, mindestens zwei tertiäre Stickstoffatome auf. Charakteristisch für die Amine der allgemeinen Formeln (XII), (XIII), (XIV) und (XV) ist weiterhin, dass sie in der Lage sind, mit mindestens 2, aber auch mit 3 oder weiteren Epoxygruppen der Organopolysiloxane der allgemeinen Formeln (XI) und, gegebenenfalls, des difunktionellen Epoxids (XXI) und der monomeren Siliciumverbindung Z-SiRₜ(OR¹¹)₍₃₋ₜ₎ in an sich bekannter Weise zu reagieren. Dabei ist im Fall von tertiären Aminen pro Equivalent an tertiären Stickstoffatomen mindestens ein Equivalent einer organischen oder anorganischen Säure HX notwendig, um eine Umsetzung mit einer Epoxygruppe zu ermöglichen. Alternativ ist auch der Einsatz der durch die Reaktion des Amins mit einem Equivalent einer Säure HX je Stickstoffequivalent des Amins erhaltenen Ammoniumsalze möglich. Die eingesetzten Amine der allgemeinen Formeln (XII), (XIII), (XIV) und (XV) können dabei gleich oder verschieden sein.

Beispiele für geeignete Amine der Formel (XII) sind Pyrrolidin, Morpholin, 2,6-Dimethylmorpholin, Piperazin, N-Methylpiperazin, Imidazol, Dimethylamin, Diethylamin, Dihexylamin, Di-(2-ethylhexyl)amin, Ditridecylamin, Dioctadecylamin, N-Methylaminopropyltrimethoxysilan, N-Ethylbutylamin, N-Ethyl-1,2-dimethylpropylamin, Di-(2-hydroxyethyl)amin, Di-(2-methoxyethyl)amin, N-Methylcyclohexylamin, Dicyclohexylamin, 2-Ethylaminoethylamin, N-Methylethanolamin, N-Butylethanolamin, 3-(2-Hydroxyethylamino)-1-propanol und Diisopropanolamin. Beispiele für geeignete Amine der Formel (XIII) sind N,N'-Dimethylpiperazin, Diazabicyclooctan, Dimorpholinodiethylether, N,N,N',N'-Tetramethyl-p-diaminobenzen, N,N,N',N'-Tetramethyl-1,3-propandiamin, N,N-Diethyl-N',N'-dimethyl-1,3-propandiamin, N,N,N',N'-Tetramethyl-1,6-hexandiamin, N,N,N',N'-Tetramethyl-4,4'-diaminodicyclohexanmethan, N,N,N',N'-Tetramethylisophorondiamin und N,N,N',N'-Tetramethyl-4,4'-diaminodiphenylmethan. Beispiele für geeignete Amine der Formel (XIV) sind N,N,N',N",N"-Pentamethyldiethylentriamin, N,N,N',N",N"-Pentamethyldipropylentriamin, N,N,N',N",N''',N'''-Hexamethyltriethylentetramin und Tris-(3-dimethylaminopropyl)amin. Beispiele für geeignete Amine der Formel (XV) sind Polyoxypropylendiamin, Polyoxyethylenoxypropylendiamin, Triethylenglycoldiamin und Polyoxyethylendiamin. Geeignete Amine der allgemeinen Formeln (XII), (XIII), (XIV) und (XV) sind dem Fachmann bekannt und kommerziell in großer Vielfalt verfügbar.

Die Amine der allgemeinen Formeln (XVI), (XVII), (XVIII), (XIX) weisen mindestens ein sekundäres und besonders bevorzugt mindestens ein tertiäres Stickstoffatom auf, welches mit der Epoxygruppe der Organopolysiloxane der allgemeinen Formeln (XI) und, gegebenenfalls, des difunktionellen Epoxids (XXI) und der monomeren Siliciumverbindung Z-SiRₜ(OR¹¹)₍₃₋ₜ₎ in an sich bekannter Weise reagiert. Dabei ist im Fall von tertiären Aminen pro Equivalent an tertiären Stickstoffatomen mindestens ein Equivalent einer organischen oder anorganischen Säure HX notwendig, um eine Umsetzung mit einer Epoxygruppe zu ermöglichen. Alternativ ist auch der Einsatz der zuvor durch separate Reaktion des Amins mit einem Equivalent einer Säure HX erhaltenen Ammoniumsalze möglich.

Beispiele für geeignete Amine der Formel (XVI) sind Trimethylamin, Dimethylethylamin, Dimethylbutylamin, Dimethyloctylamin, Dimethylisotridecylamin, Dimethylkokosamin, Dimethylmyristylamin, Dimethylstearylamin, Diisotridecylmethylamin, N-Ethylmorpholin, Butylmethylstearylamin, Methyloctylamin, Triethanolamin, Dimethylethanolamin, ethoxyliertes Dimethylethanolamin, N-Butyldiethanolamin, N,N-Dimethylaminodiglycol, Dihexylamin, Tris-(2-ethylhexyl)amin, Dimethyl-C12/C14-alkylamin, Methylcyclohexylamin, Dimethylbenzylamin, Dimethylanilin, 2-(Diethylamino)ethylamin und N-Ethyl-N-(2-hydroxyethylamin. Beispiele für geeignete Amine der Formel (XVII) sind [2-(Dimethylamino)ethyl]octansäureester, [2-(Dimethylamino)ethyl]octansäureamid, [3-(Dimethylamino)propyl]stearinsäureester, [3-(Dimethylamino)propyl]stearinsäureamid, [3-(Dimethylamino)propyl]kokosester und [3-(Dimethylamino)propyl]kokosamid. Beispiele für geeignete Amine der Formel (XVIII) sind 1,2-Dimethylimidazol, 1-Methyl-2-ethylimidazol, 1-Methylimidazol, 1-Vinylimidazol, 1-(3-Aminopropyl)-2-methylimidazol, 1-Octyl-2-methylimidazol, 1-Dodecyl-2-methylimidazol, 1-Octadecyl-2-methylimidazol und 1-(3-Hydroxypropyl)-2-methylimidazol. Beispiele für geeignete Amine der Formel (XIX) sind N,N,N',N'-Tetramethyl-1,3-propandiamin, N,N-Diethyl-N',N'-dimethyl-1,3-propandiamin, N,N,N',N'-Tetramethyl-1,6-hexandiamin, N,N,N',N'-Tetramethyl-4,4'-diaminodicyclohexanmethan, N,N,N',N'-Tetramethylisophorondiamin, 2-(Diethylamino)ethylamin, 2-(Dimethylamino)propylamin, 2-(Ethylamino)ethylamin, N,N,N',N'-Tetramethyl-4,4'-diaminodiphenylmethan, Diethylentriamin, N,N-Bis-(3-aminopropyl)methylamin, N,N-Dimethyldipropylentriamin, (N-Cyclohexyl-N-methyl)aminoethylaminopropyltrimethoxysilan, Bis-(3-dimethylaminopropyl)amin, N,N,N',N",N"-Pentamethyldiethylentriamin, N,N,N',N",N"-Pentamethyldipropylentriamin, N-(2-Aminoethyl)ethanolamin. Diazabicyclooctan, N,N-Dimethylaminoethyl-N'-methylpiperazin, Dimorpholinodiethylether, Tris-(3-dimethylaminopropyl)amin und N,N,N',N'-Tetramethyl-p-diaminobenzen. Derartige Amine der allgemeinen Formeln (XVI), (XVII), (XVIII), (XIX) sind dem Fachmann bekannt und kommerziell in großer Vielfalt verfügbar.

Beispiele für organische oder anorganische Säuren HX sind ein- und mehrwertige Säuren, wie z.B. die anorganischen Säuren Salzsäure, Schwefelsäure und Phosphorsäure, die Monocarbonsäuren Ameisensäure, Essigsäure, Propionsäure, Buttersäure, Octansäure, Stearinsäure, Benzoesäure, die Dicarbonsäuren Maleinsäure, Phthalsäure, und Adipinsäure, aber auch Alkyl- und Arylsulfonsäuren, wie z.B. Methansulfonsäure, Butansulfonsäure und p-Toluensulfonsäure. Besonders bevorzugt sind die Monocarbonsäuren Essigsäure und Propionsäure.

Beispiele für die monomere Siliciumverbindung Z-SiRₜ(OR¹¹)₍₃₋ₜ₎ sind Glycidoxypropyltrimethoxysilan, Glycidoxypropyltriethoxysilan, Glycidoxypropylmethydimethoxysilan, 2-(3,4-Epoxycyclohexyl)ethyltrimethoxysilan und Teilkondensate der monomeren Siliciumverbindungen. Derartige monomere Siliciumverbindungen sind dem Fachmann bekannt und kommerziell verfügbar.

Erwartungsgemäß kommt es bei der Herstellung des erfindungsgemäßen derivatisierten, permanent quaternierte Stickstoffatome aufweisenden, geradkettigen oder verzweigten aminofunktionellen Organopolysiloxans zur Umsetzung von 2 Organopolysiloxanen bestehend aus den Struktureinheiten (X) und (XX) mit einem Organopolysiloxan der allgemeinen Formel (XI) bzw., gegebenenfalls, mit einem difunktionellen Epoxid der allgemeinen Formel (XXI), wobei je ein Stickstoffatom einer Aminogruppen enthaltenden Seitenkette des Organopolysiloxans bestehend aus den Struktureinheiten (X) und (XX) mit je einer Epoxygruppe reagiert. Obwohl nicht explizit angegeben, sollen die durch diese Umsetzung zwangsläufig mit entstehenden, vernetzten aminofunktionellen Organopolysiloxane mit umfasst werden.

Die molaren Verhältnisse der Organopolysiloxane bestehend aus den Struktureinheiten der allgemeinen Formel (X) und (XX), der Organopolysiloxane der allgemeinen Formel (XI), der difunktionellen Epoxide der allgemeinen Formel (XXI), der monomeren Siliciumverbindung Z-SiRₜ(OR¹¹)₍₃₋ₜ₎, der Amine der allgemeinen Formeln (XII), (XIII), (XIV) und (XV), der Amine der allgemeinen Formeln (XVI), (XVII), (XVIII), (XIX) und der Säure HX werden zur Herstellung des erfindungsgemäßen Organopolysiloxans so gewählt werden, dass in den Siloxaneinheiten der allgemeinen Formel

Rₐ(RO)_{b}U_{c}SiO_{[4-(a+b+c)]/2}

mindestens ein Substituent R¹ die Bedeutung -M-D-(M-A-M-D)ₘ-M-E hat und m eine Zahl von 0 bis 50 ist. Bevorzugt ist m eine Zahl von 0 bis 10, besonders bevorzugt eine Zahl von 1 bis 4.

Es ist zum Beispiel möglich, von einem Organopolysiloxan auszugehen, das der durchschnittlichen Zusammensetzung RO-[R₂SiO_{2/2}]₃₀₀-[R([H₂NC₂H₄HNC₃H₆)SiO_{2/2}]₃-OR mit R = Methyl und statistischer Verteilung der (R₂SiO_{2/2})- und (R([H₂NC₂H₄HNC₃H₆)SiO_{2/2})-Einheiten entspricht. Organopolysiloxan (XI) soll z.B. der Formel ZR₂SiO-(R₂SiO)₂₀-SiR₂Z ebenfalls mit = Methyl und Z = Glycidoxypropyl entsprechen. Als Amin der allgemeinen Formel (XVI) wird Dimethyloctylamin, als Amin der allgemeinen Formel (XIII) N,N,N',N'-Tetramethyl-1,3-propandiamin und als Säure HX Essigsäure gewählt. Um ein erfindungsgemäßes Organopolysiloxan mit durchschnittlich 3 Substituenten der Bedeutung -M-D-(M-A-M-D)ₘ-M-E mit im Durchschnitt m = 1 zu erhalten, werden die molaren Verhältnisse des Organopolysiloxans RO-[R₂SiO_{2/2}]₃₀₀-[R([H₂NC₂H₄HNC₃H₆)SiO_{2/2}]₃-OR: Organopolysiloxan (XI) : Dimethyloctylamin : N,N,N',N'-Tetramethyl-1,3-propandiamin : Essigsäure = 1 : 6 : 3 : 3 : 9 gewählt.

Durch einfache Variation der molaren Verhältnisse ist es dem Fachmann somit möglich, eine Vielzahl von erfindungsgemäßen Organopolysiloxanen mit unterschiedlichen Molgewichten, Substituenten, Substitutionsgraden und Gehalten an quaternären Stickstoffatomen zu synthetisieren und so die physikochemischen und anwendungstechnischen Eigenschaften der erfindungsgemäßen mehrfachquaternären Organopolysiloxane gezielt zu beeinflussen.

Ein weiterer Vorteil ist es, dass es dem Fachmann möglich ist, zur Herstellung der erfindungsgemäßen Organopolysiloxane auf Rohstoffe mit unerwünschten toxikologischen oder ökotoxikologischen Eigenschaften zu verzichten. Ebenso kann auf den Einsatz von einzelnen Komponenten im Überschuss zur Erzielung befriedigender Umsätze verzichtet werden. Durch den Einsatz der Amine der allgemeinen Formeln (XVI), (XVII), (XVIII), (XIX) wird ein unkontrollierter Molekülaufbau mit weitgehender Vernetzung oder Vergelung der Produkte verhindert.

Bei dem erfindungsgemäßen Verfahren orientiert sich die Stöchiometrie der Reaktion am molaren Verhältnis der primären, sekundären und tertiären Stickstoffatome in den Aminen und in den Organopolysiloxanen enthaltend Struktureinheiten der allgemeinen Formel (X) und (XX) zum Verhältnis der Säure und der Epoxygruppen in den Organopolysiloxanen (XI) und, gegebenenfalls, den difunktionellen Epoxiden (XXI) und den monomeren Siliciumverbindungen Z-SiRₜ(OR¹⁰)₍₃₋ₜ₎. Dabei ist zu beachten, dass zur Umsetzung eines primären oder sekundären Stickstoffs kein Equivalent Säure, zur weiteren Umsetzung des dabei gebildeten und jedes anderen tertiären Stickstoffatoms zu einem quaternierten Stickstoffatom ein Equivalent Säure je Stickstoff und Epoxygruppe notwendig ist. Die entsprechenden Verhältnisse können so gewählt werden, dass ein Ausgangsstoff im Überschuss oder im Unterschuss vorliegt. Bevorzugt werden equimolare Verhältnisse zwischen den Reaktanden. Es liegt im Wissen des Fachmannes abhängig von der Anzahl der einzelnen Stickstoffatome, der Epoxygruppen, der Funktionalität der Reaktanden und der gewünschten Struktur des erfindungsgemäßen aminofunktionellen Organopolysiloxans, die molaren Verhältnisse bei dem erfindungsgemäßen Verfahren so einzustellen, z.B. experimentell durch das Durchführen von Versuchen, dass Produkte mit den gewünschten Eigenschaften erhalten werden.

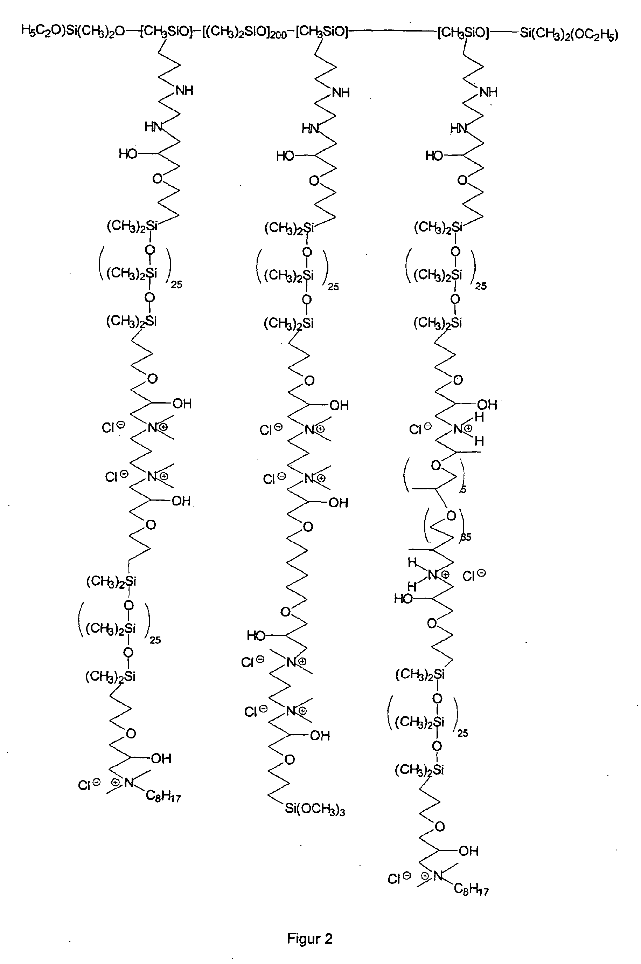

Beispiele für bevorzugte erfindungsgemäße derivatisierte, permanent quaternierte Stickstoffatome aufweisende, geradkettige oder verzweigte aminofunktionelle Organopolysiloxane sind in den Figuren 1 und 2 angegeben.

Bei dem erfindungsgemäßen Verfahren können inerte organische Lösungsmittel benutzt werden, obwohl die Mitverwendung von inerten, organischen Lösungsmitteln nicht bevorzugt ist.

Zur Herstellung der erfindungsgemäßen Organopolysiloxane nach dem erfindungsgemäßen Verfahren sind grundsätzlich keine Katalysatoren notwendig. Eine Mitverwendung von Katalysatoren, die besonders zur Härtung von Epoxidharzen geeignet sein sollten, ist jedoch unschädlich. Geeignete Katalysatoren zum Einsatz im erfindungsgemäßen Verfahren können z.B. Phenole und sekundäre Alkohole sein.

Das erfindungsgemäße Verfahren wird im Allgemeinen bei Temperaturen von 10 bis 200°C durchgeführt. Um technisch hinreichende Reaktionsgeschwindigkeiten zu erzielen, werden Temperaturen > 60°C bevorzugt. Insbesondere sind Temperaturen von 70 bis 120°C bevorzugt. Vorzugsweise wird bei Umgebungsdruck, also bei 900 bis 1100 hPa gearbeitet. Im Fall des Einsatzes von leichterflüchtigen Komponenten ist aber auch das Arbeiten bei erhöhten Drücken möglich. Das erfindungsgemäße Verfahren kann aber ebenso bei verminderten Drücken durchgeführt werden.

Im erfindungsgemäßen Verfahren können die Edukte sowohl im Eintopfverfahren, bei dem alle Komponenten von Beginn an homogen vermischt vorliegen, als auch durch nacheinander erfolgende Dosierung einzelner Edukte miteinander in Kontakt gebracht werden. Die Reihenfolge der Zugabe der Edukte kann dabei beliebig gewählt werden. Es ist dem Fachmann möglich, eine große Zahl geeigneter Zugabereihenfolgen zu finden, die die Herstellung der erfindungsgemäßen derivatisierten, permanent quaternierte Stickstoffatome aufweisenden, geradkettigen oder verzweigten aminofunktionellen Organopolysiloxane erlaubt. So ist es zum Beispiel möglich, die Organopolysiloxane enthaltend Struktureinheiten der allgemeinen Formel (X) und (XX) zuerst mit den Aminen der allgemeinen Formeln (XII), (XIII), (XIV); (XV) und nachfolgend mit den Organopolysiloxanen der allgemeinen Formel (XI) und, gegebenenfalls, mit den difunktionellen Epoxiden der allgemeinen Formel (XXI), den Aminen der allgemeinen Formeln (XVI), (XVII), (XVIII) und (XIX) und der Säure HX umzusetzen. Eine weitere mögliche Variante ist es, die Organopolysiloxane und Amine zu mischen, zu erwärmen und bei Erreichen der gewünschten Reaktionstemperatur die Säure HX zuzugeben.

Das erfindungsgemäße Verfahren kann ansatzweise, halbkontinuierlich oder vollkontinuierlich durchgeführt werden.

Ein weiterer Gegenstand der Erfindung sind Zubereitungen, die mindestens ein erfindungsgemäßes derivatisiertes, permanent quaternierte Stickstoffatome aufweisendes, geradkettiges oder verzweigtes aminofunktionelles Organopolysiloxan enthalten. Unter erfindungsgemäßen Zubereitungen versteht man z.B. Lösungen, Mischungen, Emulsionen und Dispersionen der erfindungsgemäßen Organopolysiloxane.

Als Lösungsmittel kommen je nach molekularem Aufbau der derivatisierten, permanent quaternierte Stickstoffatome aufweisenden, geradkettigen oder verzweigten aminofunktionellen Organopolysiloxane unpolare und polare Lösungsmittel in Betracht. Geeignete unpolare Lösungsmittel sind z.B. Toluen, Xylen, Benzen, Ethylbenzen und chlorierte Kohlenwasserstoffe. Geeignete polare Lösungsmittel sind z.B. ein- und mehrwertige Alkohole mit einem Molekulargewicht von 50 bis ca. 2000 g/mol. Derartige zum erfindungsgemäßen Einsatz geeignete mehrwertige Alkohole sind dem Fachmann bekannt und in großer Anzahl kommerziell erhältlich. Beispiele sind Glyzerin, Ethylenglycol, Polyethylenglycol, Polypropylenglycol, Polyoxyethylenpolyoxypropylenmischpolymerisate mit statistischer oder blockartiger Verteilung, Dipropylenglycol, Dipropylenglycolmonoethylether, Butyldiglycol, 1,3-Propandiol, Pentaerythrit und besonders bevorzugt 1,2-Propandiol und Dipropylenglycol. Je nach Einsatz der erfindungsgemäßen mehrfachquaternären Organopolysiloxane ist es dem Fachmann möglich, auch weitere geeignete Lösungsmittel auszuwählen.

Des weiteren ist es möglich, die erfindungsgemäßen Organopolysiloxane in bestehende Produkte einzubringen, bzw. mit anderen Verbindungen zu mischen und diese Mischungen dann weiter zu verarbeiten. So können die erfindungsgemäßen mehrfachquaternären Organopolysiloxane z.B. mit anderen Siliconpolymeren, wie Aminosiliconölen, Polyethersiloxanen, Siliconwachsen, Alkylpolyethersiloxanen, Polydimethylsiliconölen, Polydimethylsiloxanbetainen, Polydimethylsiloxandiolen, Siliconharzen, aber auch mit Mineralölen, natürlichen und synthetischen Wachsen und weiteren Verbindungen und Polymeren gemischt und als Mischung oder nach einem weiteren Verarbeitungsschritt, z.B. nach Emulgieren oder Dispergieren, eingesetzt werden.

Ist eine Applikation der erfindungsgemäßen Organopolysiloxane aus wässrigem Medium erwünscht, können Emulsionen oder Dispersionen hergestellt werden. Derartige Emulsionen und Dispersionen können, insbesondere bei Verwendung von erfindungsgemäßen Organopolysiloxanen mit einem relativ geringen Anteil an quaternierten Stickstoffatomen neben Wasser zusätzlich Dispergiermittel, Verdickungsmittel, Biocide und weitere Bestandteile enthalten. Geeignete Dispergiermittel sind vorzugsweise nichtionische, anionische oder kationische Emulgatoren. In Produkten zur Verbesserung des Weichgriffs von Textilien, Papier- und Lederprodukten können ebenso organische, quaternierte Ammoniumverbindungen und/oder Betaine enthalten sein. Geeignete kationenaktive Emulgatoren sind z.B. Didecyldimethylammoniumchlorid, Dioctadecyldimethylammoniumchlorid sowie deren entsprechende Hydroxide, aber auch verschiedene Imidazoliniumverbindungen. Weiterhin sind Betaine als Emulgatoren geeignet, z.B. Fettsäureamidoalkylbetain, Kokosamidopropylbetain, sowie Mischungen von Betainen bzw. kationenaktiven Emulgatoren mit nichtionogenen Verbindungen, beziehungsweise ausschließlich nichtionogene oder Mischungen verschiedener nichtionogener Emulgatoren. Nichtionogene Emulgatoren können durch Anlagerung von Ethylenoxid und anderen Alkylenoxiden an Verbindungen mit acidem Wasserstoff, aber auch durch eine Reihe weiterer Verfahren erhalten werden. Eine große Anzahl solcher nichtionogener Emulgatoren sind für den Einsatz geeignet. Insbesondere geeignet sind Fettsäurepartialester von mono- oder polyfunktionellen Alkoholen mit 1 bis 12 Kohlenstoffatomen im Alkohol. Beispiele für derartige polyfunktionelle Alkohole sind Ethylenglycol, Glycerol, Xylitol, Sorbitol, Sorbitan und Pentaerythritol. Der Fettsäureesterteil dieser nichtionogenen Emulgatoren besteht zumeist aus 12 bis 22 Kohlenstoffatomen und kann z.B. ein Lauryl-, ein Oleyl-, ein Stearyl- oder ein Myristylrest sein. Derartige Fettsäurepartialester von polyfunktionellen Alkoholen können weiterhin mit Alkylenoxiden, wie z.B. Ethylenoxid, umgesetzt werden. Beispiel für derartige nichtionogene Emulgatoren sind ethoxyliertes Sorbitanstearat oder ethoxyliertes Sorbitanoleat. Weiterhin können auch Anlagerungsprodukte von Alkylenoxiden an aliphatische, geradkettige oder verzweigte Alkohole mit 6 bis 22 C-Atomen, z.B. Isotridecylethoxylat, oder an alkylierte Phenole, z.B. Nonylphenolethoxylate, verwendet werden. Des weiteren können alkoxylierte Fettamine als nichtionogene Emulgatoren Verwendung finden. Gut geeignet zur Verwendung als Emulgatoren sind auch hydrophil modifizierte Organopolysiloxane, z.B. Organopolysiloxane in denen 1-35% der Siliciumatome mit seitenständigen Polyethergruppen, die 2 - 50, und vorzugsweise 6 - 35 angelagerte Ethylenoxid- und/oder Propylenoxidgruppen in statistischer oder blockartiger Verteilung enthalten. Die weiteren an Si-Atome gebundenen Substituenten in derartigen Organopolysiloxanen können aus einer oder mehreren Alkylgruppen mit 1-20 Kohlenstoffatomen oder Alkenylgruppen mit 2-20 Kohlenstoffatomen bestehen. Weiterhin geeignet sind mit Polyethern aus Ethylen- und/oder Propylenoxid α,ω-substituierte Polydimethylsiloxane. Weitere geeignete nichtionogene Emulgatoren sind Alkylpolyglucoside. Zum Einsatz in den erfindungsgemäßen Zusammensetzungen sind weiterhin anionische Tenside geeignet, z.B. Alkyl- oder Arylpolyalkylenglycolethercarbonsäuren, Alkyl- oder Arylpolyalkylenglycolethersulfate, Alkylbenzolsulfonate, Alkylbenzolsulfonsäuren, Aminsalze von Carbonsäuren, Fettalkoholpolyalkylenglycolethercarboxylate und -sulfate, Fettalkoholsulfate, Paraffinsulfonate, Phosphorsäureester, Rizinusölsulfonate und Sulfosuccinate. Besonders geeignet zum Einsatz in den erfindungsgemäßen Zusammensetzungen sind kationische und nichtionische Emulgatoren und Mischungen von kationischen und nichtionischen Emulgatoren. Geeignete Emulgatoren sind dem Fachmann bekannt und kommerziell erhältlich. Geeignete Verdickungsmittel sind z.B. organisch modifizierte Schichtsilicate, z.B. organisch modifizierter Bentonit, Polyacrylate, Methylcellulose und andere Cellulosederivate, Rhizinusölderivate, Polyurethan-Polyharnstoff-Polyether-Copolymere, Poly-N-vinylpyrrolidon und eine Reihe weiterer Substanzen, die dem Fachmann bekannt und kommerziell erhältlich sind. Beispiele für Biocide oder Konservierungsmittel sind bestimmte quaternäre Ammoniumverbindungen, Formaldehyd bzw. Formaldehyddepotstoffe, N-Methylisothiazolinon, 5-Chlor-N-methylisothiazolinon, 1,2-Benzisothialzolin-3-on und dessen Salze. Derartige bakterizid wirkende Bestandteile sind dem Fachmann bekannt und kommerziell erhältlich.

Die erfindungsgemäßen Organopolysiloxane und diese enthaltende Zubereitungen können zur Weichgriffausrüstung von Textilien, als Prozesshilfsmittel zur Herstellung und zur Ausrüstung von natürlichen oder synthetischen Fasern, in Wasch- und Reinigungsmitteln, in Polituren und Pflegemitteln zur Behandlung harter Oberflächen, zur Beschichtung und Trocknung von Lackoberflächen von Automobilen, als Korrosionsinhibitoren und zur Haut- und Haarpflege eingesetzt werden.

Unter Fasern und Textilien versteht man hierbei organische Fasern in Form von Fäden, Garnen, Vliesen, Matten, Strängen, unter Textilien alle gewebten, gestrickten, gewirkten Textilien in Form von Stoffbahnen, Kleidungsstücken oder Teilen von Kleidungsstücken und anderen Erzeugnissen, wie z.B. Planen oder Möbelstücken. Die mit den erfindungsgemäßen derivatisierten, permanent quaternierte Stickstoffatome aufweisenden, geradkettigen oder verzweigten aminofunktionellen Organopolysiloxanen behandelten Fasern können aus Keratin, insbesondere Wolle, Baumwolle, Polyvinylalkohol, Vinylacetat, Rayon, Hanf, Seide, Polypropylen, Polyester, Polyurethan, Polyamid, Polyacrylat, Cellulose und Gemischen aus zwei oder mehr solcher Fasern bestehen. Die Faser- und Textilmaterialien können sowohl natürlichen oder synthetischen Ursprungs sein. Die Applikation der erfindungsgemäßen Organopolysiloxane zur Ausrüstung von Fasern und Textilien erfolgt in Form von Zubereitungen, insbesondere aus wässrigen Zubereitungen. Applikationsverfahren sind dem Fachmann bekannt und umfassen Ausziehverfahren, Foulard und Jetfärbemaschinen, aber auch Tauchbäder, Gieß- und Streichverfahren, Sprühverfahren, Aufwalzen, Klotzen und Drucken. Durch Anwendung eines gezielt, gegebenenfalls durch Versuche, ausgewählten, erfindungsgemäßen Organopolysiloxans ist es dem Fachmann möglich, den damit ausgerüsteten Textilien und Fasern einen angenehmen und weichen Griff zu verleihen und dabei Textilien und Fasern zu erhalten, deren Wasseraufnahmefähigkeit nicht vermindert oder verlangsamt ist. Die Textilien können unter üblichen Bedingungen gewaschen werden, ohne dass es zu einer Verminderung der Weichgriffeigenschaften oder der Wasseraufnahmefähigkeit kommt. Die erfindungsgemäßen Organopolysiloxane können weiterhin zur Hydrophilierung von Fasern, Textilien und Nonwovens eingesetzt werden.

Die erfindungsgemäßen Organopolysiloxane können weiterhin in Wasch- und Reinigungsmitteln, auch in Kombination mit ausgewählten, für solche Produkte typischen, anionischen Tensiden verwendet werden. Durch die Anwendung kann insbesondere ein verbesserter Griff der Textilien nach der Wäsche erreicht werden. In Reinigungsmitteln kann z.B. eine Verbesserung der Reinigungswirkung durch bessere Substratbenetzung erreicht werden. Bevorzugt sind hier Reiniger für harte Oberflächen, wie z.B. Fußböden, Fliesen und Keramik.

Ein weiterer Schwerpunkt ist die Verwendung in Polituren und Pflegemitteln zur Behandlung harter Oberflächen. Bevorzugt sind hier lackierte Oberflächen, auf denen die erfindungsgemäßen Organopolysiloxane eine gute Haftung zeigen und z.B. Glanz, Kratzfestigkeit und Antistatik verbessern können.

Weiterhin können die erfindungsgemäßen Organopolysiloxane in Formulierungen für den Einsatz in automatischen Autowäschen eingesetzt werden. Eine nach der Wäsche aufgesprühte, diese enthaltende Zubereitung verbessert z.B. den Glanz und erhöht die Trocknungsgeschwindigkeit im nachfolgenden Trockenschritt.

Eine weitere Einsatzmöglichkeit der erfindungsgemäßen verzweigten Organopolysiloxane besteht in der Verbesserung der Korrosionsbeständigkeit von Metallen während und nach mechanischer Bearbeitung unter Zuhilfenahme von Kühlschmiermitteln, denen die erfindungsgemäßen Organopolysiloxane zugesetzt wurden.

Des weiteren können die erfindungsgemäßen Organopolysiloxane auch in Formulierungen zur Haut- und Haarpflege wie Shampoos, Haarkonditioniermitteln, Haarsprays, Waschlotionen, Seifen, Cremes oder Rasierschäumen verwendet werden.

### Beispiele

Die vorliegende Erfindung wird durch die folgenden Ausführungsbeispiele näher beschrieben und erläutert.

### Beispiel 1: Herstellung eines Organopolysiloxans der allgemeinen Formel (XI)

753,4 g (0,1 mol) eines Organosiloxans der Struktur HMe₂SiO-(Me₂SiO)₁₀₀-SiMe₂H (Me = Methyl) wurden in 600 ml Toluen in einem 2I-Dreihalskolben mit Rückflusskühler, Thermometer, Magnetrührer und Tropftrichter auf 110°C erwärmt, mit 1,2 ml einer 0,5%igen Lösung von Hexachloroplatinsäure in Isopropanol versetzt und anschließend unter Rühren 22,9 g (0,2 mol) Allylglycidylether zugegeben. Während der Reaktion kam es zu einem Temperaturanstieg auf 116°C. Bei dieser Temperatur wurde weitere 4 Stunden gerührt. Eine IR-spektroskopische Untersuchung ergab einen Umsatzgrad der H-Si-Gruppen von 99,6%. In einem Rotationsverdampfer wurde das Toluen abrotiert und das Produkt für weitere 2 Stunden bei einer Temperatur von 110°C und einem Druck von 8 mbar entflüchtigt. Es wurde ein hellgelbes Epoxysiloxan einer Viskosität von 122,5 mm²/s bei 25°C erhalten.

### Beispiel 2: Herstellung eines Organopolysiloxans der allgemeinen Formel (XI)

531,4 g (0,1 mol) eines Organosiloxans der Struktur HMe₂SiO-(Me₂SiO)₇₀-SiMe₂H (Me = Methyl) wurden in 600 ml Toluen in einem 2I-Dreihalskolben mit Rückflusskühler, Thermometer, Magnetrührer und Tropftrichter auf 110°C erwärmt, mit 1,2 ml einer 0,5%igen Lösung von Hexachloroplatinsäure in Isopropanol versetzt und anschließend unter Rühren 22,9 g (0,2 mol) Allylglycidylether zugegeben. Während der Reaktion kam es zu einem Temperaturanstieg auf 116°C. Bei dieser Temperatur wurde weitere 4 Stunden gerührt. Eine IR-spektroskopische Untersuchung ergab einen Umsatzgrad der H-Si-Gruppen von 99,2%. In einem Rotationsverdampfer wurde das Toluen abrotiert und das Produkt für weitere 2 Stunden bei einer Temperatur von 110°C und einem Druck von 8 mbar entflüchtigt. Es wurde ein hellgelbes, klares Epoxysiloxan einer Viskosität von 103,2 mm²/s bei 25°C erhalten.

### Beispiel 3: Herstellung eines erfindungsgemäßen derivatisierten aminofunktionellen Organopolysiloxans

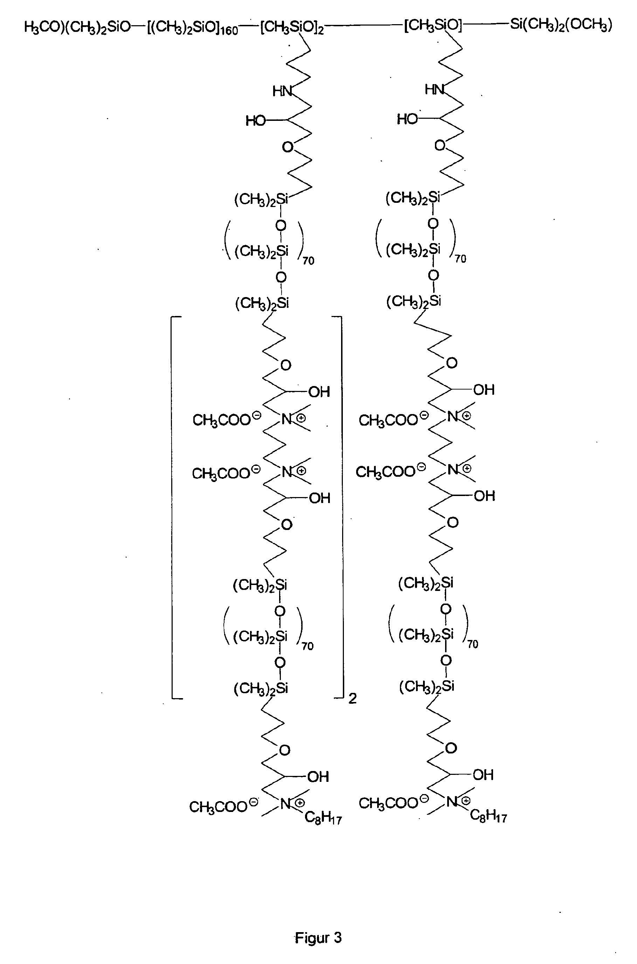

11,65 g (0,95 mmol) eines aminofunktionellen Organopolysiloxans der Struktur: MeOMe₂SiO-(Me₂SiO)₁₆₀(MeU'SiO)₃-SiMe₂OMe mit statistisch verteilten Me₂SiO- und MeU'SiO-Gruppen (Me = Methyl, U' = 3-Aminopropyl) wurden in einem 250 ml-Dreihalskolben mit Rückflusskühler, Thermometer und Rührer mit 42,1 g (7,6 mmol) des Epoxysiloxans aus Beispiel 2, 0,62 g (4,75 mmol), N,N,N',N'-Tetramethyl-1,3-propandiamin, 0,45 g (2,85 mmol) Octyldimethylamin und 0,91 g (15,2 mmol) Eisessig bei Raumtemperatur gemischt und unter Rühren auf 110°C erwärmt. Bei dieser Temperatur wurde für eine weitere Stunde gerührt. Die anfänglich trübe Reaktionsmischung wird wenige Minuten nach Erreichen der Reaktionstemperatur klar. Es wurde ein gelbes, klares Organopolysiloxan mit einer Viskosität von 7150 mPas bei 25°C erhalten. Die Strukturformel des erhaltenen, erfindungsgemäßen Organopolysiloxans wird in Figur 3 angegeben.

### Beispiel 4: Herstellung eines erfindungsgemäßen derivatisierten aminofunktionellen Organopolysiloxans

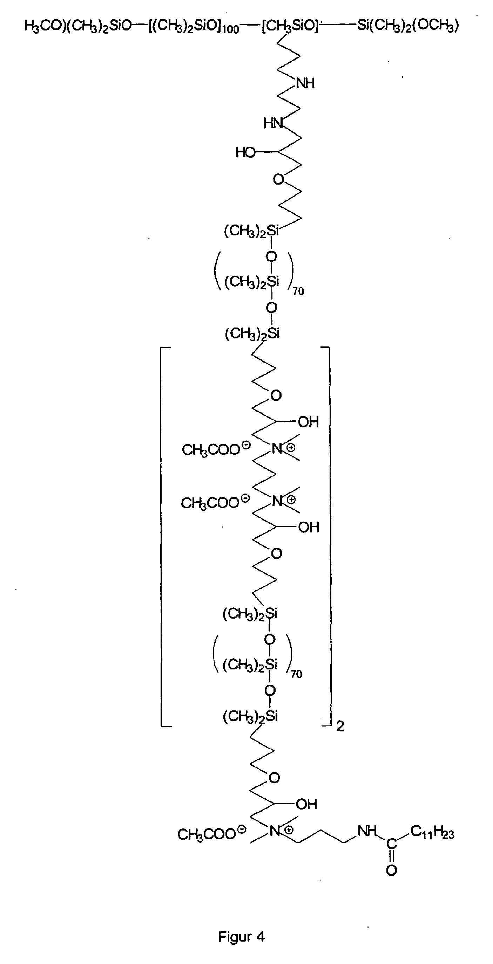

26,47 g (3,5 mmol) eines aminofunktionellen Organopolysiloxans der Struktur: MeOMe₂SiO-(Me₂SiO)₁₀₀(MeU'SiO)₁-SiMe₂OMe mit statistisch verteilten Me₂SiO- und MeU'SiO-Gruppen (Me = Methyl, U' = 3-Aminoethylaminopropyl) wurden in einem 250 ml-Dreihalskolben mit Rückflusskühler, Thermometer und Rührer mit 58,2 g (10,5 mmol) des Epoxysiloxans aus Beispiel 2, 0,91 g (7 mmol), N,N,N',N'-Tetramethyl-1,3-propandiamin, 0,95 g (3,5 mmol) Lauryl(dimethylaminopropyl)amid und 1,26 g (21 mmol) Eisessig bei Raumtemperatur gemischt und unter Rühren auf 110°C erwärmt. Bei dieser Temperatur wurde für eine weitere Stunde gerührt. Die anfänglich trübe Reaktionsmischung wird zwei Minuten nach Erreichen der Reaktionstemperatur klar. Es wurde ein gelbes, klares Organopolysiloxan mit einer Viskosität von 9900 mPas bei 25°C erhalten. Die Strukturformel des erhaltenen, erfindungsgemäßen Organopolysiloxans wird in Figur 4 angegeben.

### Beispiel 5: Herstellung eines erfindungsgemäßen derivatisierten aminofunktionellen Organopolysiloxans

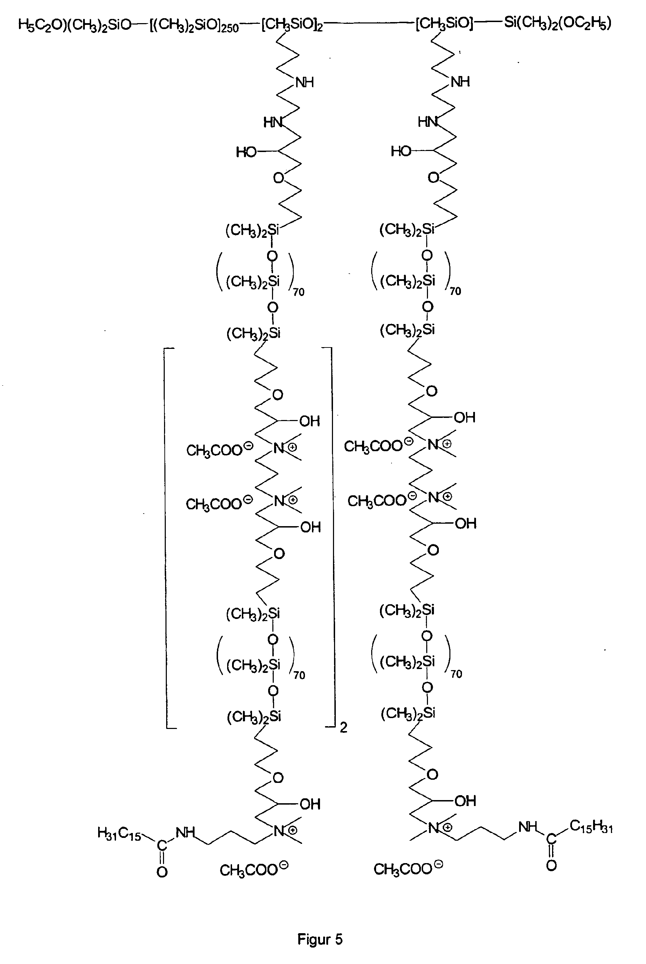

67,6 g (3,5 mmol) eines aminofunktionellen Organopolysiloxans der Struktur: EtOMe₂SiO-(Me₂SiO)₂₅₀(MeU'SiO)₃-SiMe₂OEt mit statistisch verteilten Me₂SiO- und MeU'SiO-Gruppen (Et = Ethyl, Me = Methyl, U' = 3-Aminoethylaminopropyl) wurden in einem 500 ml-Dreihalskolben mit Rückflusskühler, Thermometer und Rührer mit 155,2 g (28 mmol) des Epoxysiloxans aus Beispiel 2, 2,27 g (17,5 mmol), N,N,N',N'-Tetramethyl-1,3-propandiamin, 3,57 g (10,5 mmol) Kokos(dimethylaminopropyl)amid bei Raumtemperatur gemischt, unter Rühren auf 80°C erwärmt und dann 3,36 g (56 mmol) Eisessig zugegeben. Die Reaktionsmischung wurde unter Rühren auf 110°C erwärmt. Bei dieser Temperatur wurde für eine weitere Stunde gerührt. Die anfänglich trübe Reaktionsmischung wird zwei Minuten nach Erreichen der Reaktionstemperatur von 110°C klar. Es wurde ein gelbes, klares Organopolysiloxan mit einer Viskosität von 25500 mPas bei 25°C erhalten. Die Strukturformel des erhaltenen, erfindungsgemäßen Orgahopotysitoxans wird in Figur 5 angegeben

### Beispiel 6: Herstellung eines erfindungsgemäßen derivatisierten aminofunktionellen Organopolysiloxans

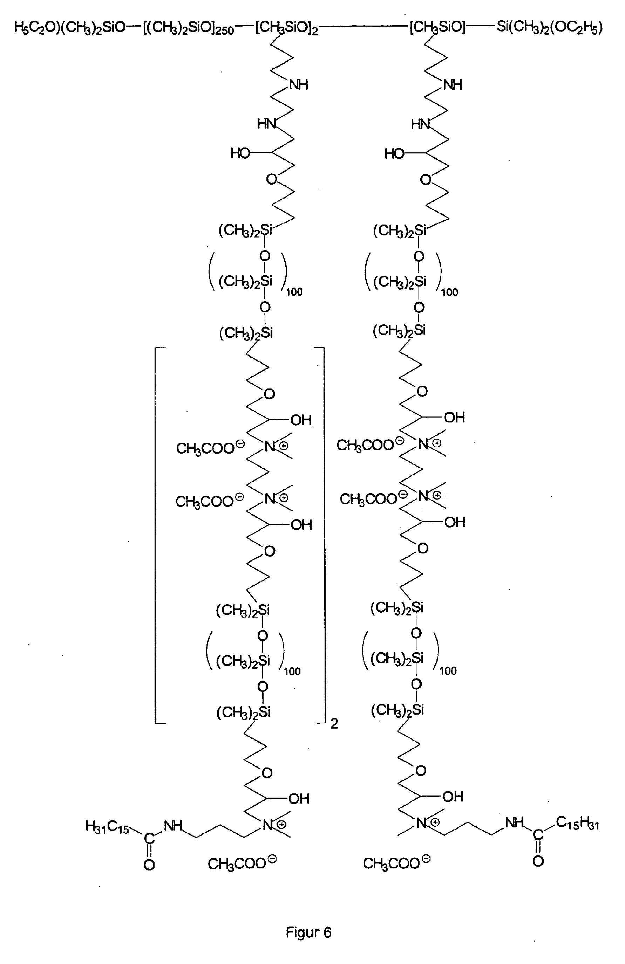

67,6 g (3,5 mmol) eines aminofunktionellen Organopolysiloxans der Struktur: EtOMe₂SiO-(Me₂SiO)₂₅₀(MeU'SiO)₃-SiMe₂OEt mit statistisch verteilten Me₂SiO- und MeU'SiO-Gruppen (Et = Ethyl, Me = Methyl, U' = 3-Aminoethylaminopropyl) wurden in einem 500 ml-Dreihalskolben mit Rückflusskühler, Thermometer und Rührer mit 217,3g(28mmol)des Epoxysiloxans aus Beispiel 1, 2,27 g (17,5 mmol), N,N,N',N'-Tetramethyl-1,3-propandiamin, 3,57 g (10,5 mmol) Kokos(dimethylaminopropyl)amid bei Raumtemperatur gemischt, unter Rühren auf 80°C erwärmt und dann 3,36 g (56 mmol) Eisessig zugegeben. Die Reaktionsmischung wurde unter Rühren auf 110°C erwärmt. Bei dieser Temperatur wurde für eine weitere Stunde gerührt. Die anfänglich trübe Reaktionsmischung wird fünf Minuten nach Erreichen der Reaktionstemperatur von 110°C klar. Es würde ein gelbes, klares Organopolysiloxan mit einer Viskosität von 31400 mPas bei 25°C erhalten. Die Strukturformel des erhaltenen, erfindungsgemäßen Organopolysiloxans wird in Figur 6 angegeben.

### Beispiel 7: Herstellung eines erfindungsgemäßen derivatisierten aminotunktioriellen Organopolysiloxans

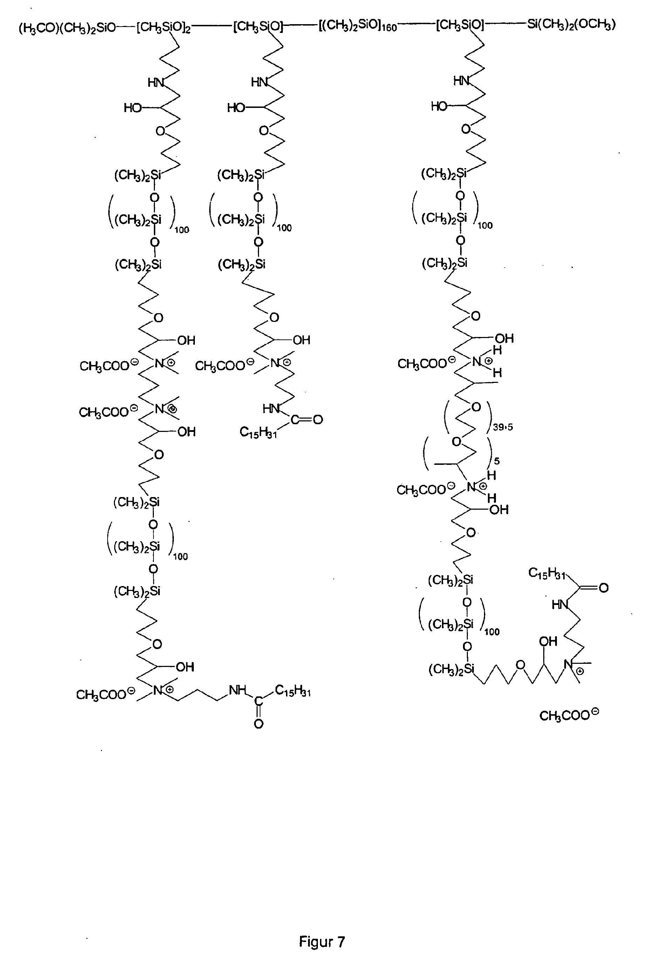

24,5 g (2 mmol) eines aminofunktionellen Organopolysiloxans der Struktur: MeOMe₂SiO-(Me₂SiO)₁₆₀(MeU'SiO)₃-SiMe₂OMe mit statistisch verteilten Me₂SiO- und MeU'SiO-Gruppen (Me = Methyl, U' = 3-Aminopropyl) wurden in einem 250 ml-Dreihalskolben mit Rückflusskühler, Thermometer und Rührer mit 77,6 g (10 mmol) des Epoxysiloxans aus Beispiel 1, 0,26 g (2 mmol). N,N,N',N'-Tetramethyl-1,3-propandiamin, 4,2 g (2 mmol) eines Polyoxyethylenpolyoxypropylendiamins mit durchschnittlich 39,5 Ethylenoxid- und 5 Propylenoxideinheiten, charakterisiert durch einen Schmelzpunkt von 43°C und eine Viskosität von 134 cS bei 50°C, 2,04 g (6 mmol) Kokos(dimethylaminopropyl)amid und bei Raumtemperatur gemischt, unter Rühren auf 80°C erwärmt und dann 1,2 g (20 mmol) Eisessig zugegeben. Die Reaktionsmischung wurde unter Rühren auf 110°C erwärmt. Bei dieser Temperatur wurde für eine weitere Stunde gerührt. Es wurde ein gelbes, trübes Organopolysiloxan mit einer Viskosität von 29000 mPas bei 25°C erhalten. Die Strukturformel des erhaltenen, erfindungsgemäßen Organopolysiloxans wird in Figur 7 angegebene.

### Beispiel 8: Herstellung eines erfindungsgemäßen derivatisierten aminofunktionellen Organopolysiloxans

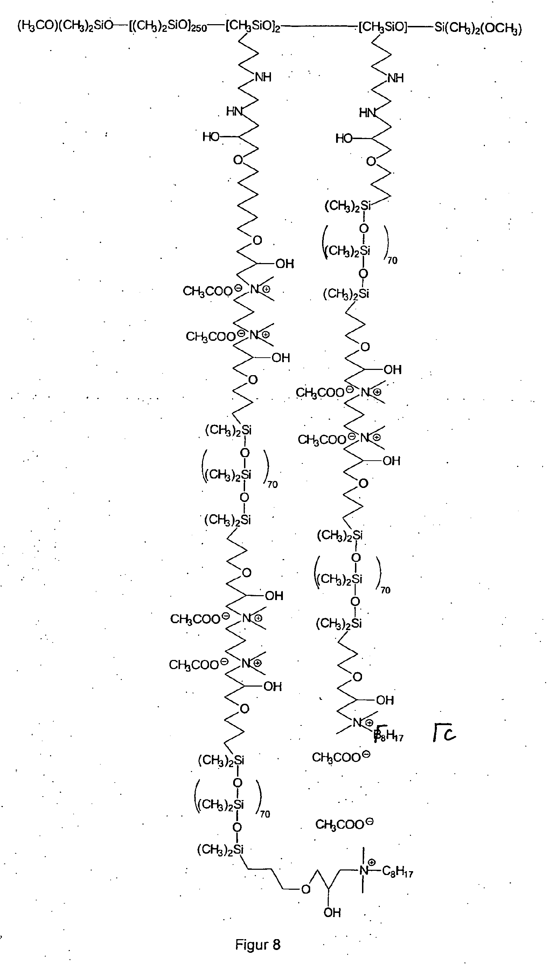

67,6 g (3,5 mmol) eines aminofunktionellen Organopolysiloxans der Struktur: MeOMe₂SiO-(Me₂SiO)₂₅₀(MeU'SiO)₃-SiMe₂OMe mit statistisch verteilten Me₂SiO- und MeU'SiO-Gruppen (Me = Methyl, U' = 3-Aminoethylaminopropyl) wurden in einem 500 ml-Dreihalskolben mit Rückflußkühler, Thermometer und Rührer mit 116,4 g (21 mmol) des Epoxysiloxans aus Beispiel 2, 1,82g (14 mmol), N,N,N',N'-Tetramethyl-1,3-propandiamin, 0,81g (3,5 mmol) Hexandioldiglycidylether und 1,65 g (10,5 mmol) Octyldimethylamin bei Raumtemperatur gemischt, unter Rühren auf 80°C erwärmt und dann 2,94 g (49 mmol) Eisessig zugegeben. Die Reaktionsmischung wurde unter Rühren auf 110°C erwärmt. Bei dieser Temperatur wurde für eine weitere Stunde gerührt. Das erhaltene hochviskose, gelbe, trübes Organopolysiloxan wurde mit 5% 1,2-Propandiol verdünnt und ein Produkt mit einer Viskosität von 24700 mPas bei 25°C erhalten. Die Strukturformel des erhaltenen, erfindungsgemäßen Organopolysiloxans wird in Figur 8 angegeben

### Beispiel 9: Herstellung eines erfindungsgemäßen derivatisierten aminofunktionellen Organopolysiloxans

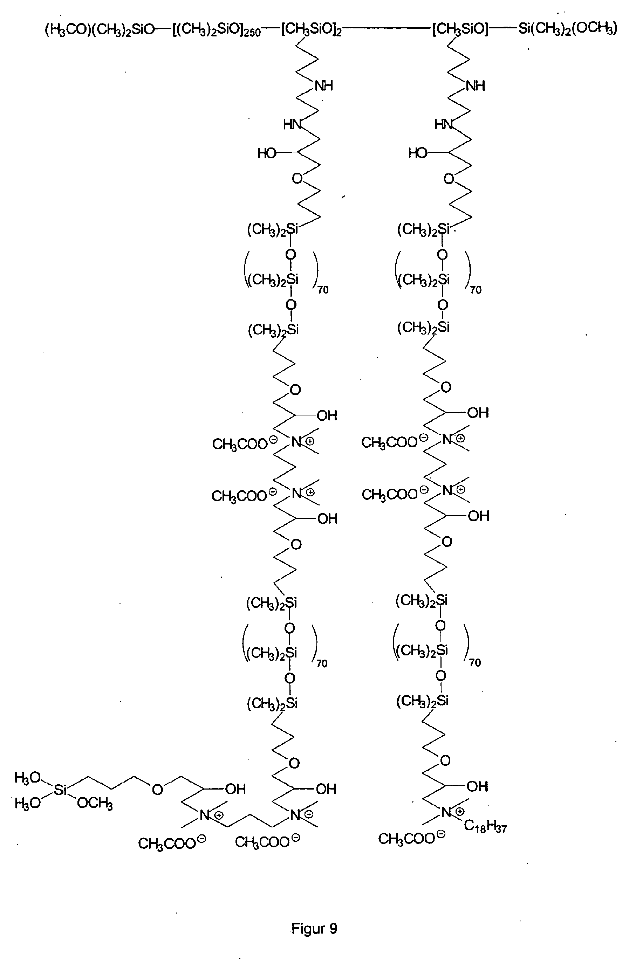

67,6 g (3,5 mmol) eines aminofunktionellen Organopolysiloxans der Struktur: MeOMe₂SiO-(Me₂SiO)₂₅₀(MeU'SiO)₃-SiMe₂OMe mit statistisch verteilten Me₂SiO- und MeU'SiO-Gruppen (Me = Methyl, U' = 3-Aminoethylaminopropyl) wurden in einem 500 ml-Dreihalskolben mit Rückflusskühler, Thermometer und Rührer mit 116,4 g (21 mmol) des Epoxysiloxans aus Beispiel 2, 2,28 g (17,5 mmol), N,N,N',N'-Tetramethyl-1,3-propandiamin, 1,65 g (7 mmol) Glycidoxypropyltrimethoxysilan und 1,04 g (3,5 mmol) Octadecyldimethylamin bei Raumtemperatur gemischt, unter Rühren auf 80°C erwärmt und dann 2,73 g (45,5 mmol) Eisessig zugegeben. Die Reaktionsmischung wurde unter Rühren auf 110°C erwärmt. Bei dieser Temperatur wurde für eine weitere Stunde gerührt. Das erhaltene gelbe, trübes Organopolysiloxan mit einer Viskosität von 44000 mPas wurde mit 5% 1,2-Propandiol verdünnt und ein Produkt mit einer Viskosität von 14900 mPas bei 25°C erhalten. Die Strukturformel des erhaltenen, erfindungsgemäßen Organopolysiloxans wird in Figur 9 angegeben.

### Vergleichsbeispiel 1

Es wurde ein Aminosiliconöl nach EP-A-1 081 271, Muster C, charakterisiert durch eine Viskosität von 3100 mPas bei 25°C hergestellt.

### Vergleichsbeispiel 2

Analog dem in DE-A-37 19 086, Beispiel 3, beschriebenen Verfahren wurden 77,6 g (0,01 mol) des Epoxysiloxans aus Beispiel 2 mit 5,68 g (0,02 mol) Lauryl(dimethylaminopropyl)amid und 1,2 g (0,02 mol) Eisessig in 80 g Wasser und 200 ml Isopropanol umgesetzt. Es wurde ein stark gelb gefärbtes, leicht trübes Produkt einer Viskosität von 3800 mPas bei 25°C erhalten.

### Herstellung von Emulsionen

Eine Mischung aus 12 g eines Polyethersiloxans mit seitenständigen, ausschließlich Ethylenoxid enthaltenden, Polyetherketten, charakterisiert durch eine Viskosität von 950 mPas bei 25°C und einem Trübungspunkt einer 1%igen wässrigen Lösung des Polyethersiloxans von 73°C, 7,3 g eines i-Tridecylethoxylats mit 5 EO und 0,5 g deionisiertes Wasser wurden in einem 250 ml Becherglas mit einem Propellerrührer bei einer Geschwindigkeit von 250 U/min gerührt. Nacheinander werden nun 7,1 g Butyldiglycol, 11,4 g der Organopolysiloxane aus den Beispielen 5 und 6, bzw. den Vergleichsbeispielen zugegeben und 3 min gerührt. Nachfolgend werden in 10 g Schritten 61,7 g deionisiertes Wasser zugegeben und verrührt. Nach der letzten Zugabe wird für weitere 5 Minuten gerührt.
Emulsion E1 (erfindungsgemäß): enthält Organopolysiloxan aus Beispiel 5: Es wurde eine leicht gelbe, klare Mikroemulsion erhalten.
Emulsion E2 (erfindungsgemäß): enthält Organopolysiloxan aus Beispiel 6: Es wurde eine leicht gelbe, klare Mikroemulsion erhalten.
Vergleichsemulsion VE1 (nicht erfindungsgemäß): enthält Aminosiliconöl aus Vergleichbeispiel 1: Es wurde eine stark trübe Mikroemulsion erhalten.
Vergleichsemulsion VE2 (nicht erfindungsgemäß): enthält Aminosiliconöl aus Vergleichbeispiel 2: Es wurde eine leicht gelbe, klare Mikroemulsion erhalten.
Vergleichsemulsion VE3 (nicht erfindungsgemäß): enthält statt eines Organopolysiloxans die gleiche Menge Dilasoft KPL flüssig konz., eines auf einem Fettsäureamid beruhenden hydrophilen Weichmachers der Fa. Clariant AG.

Vergleichsemulsion VE4 (nicht erfindungsgemäß): ist eine Mischung aus
a) 30 % einer 35 %igen wässrigen Makroemulsion eines aminofunktionellen Organopolysiloxans der Struktur: MeO-(Me₂SiO)₂₅₀(MeRSiO)₃-Me mit statistisch verteilten Me₂SiO- und MeRSiO-Gruppen (Me = Methyl, R = 3-Aminoethylaminopropyl) und
b) 70 % einer 35 %igen wässrigen Makroemulsion des Epoxysiloxans aus Beispiel 2.

### Ausrüstungsbeispiele

Es wurde ein gebleichter, unausgerüsteter Baumwollfrottee mit 380 g/m² mit der jeweiligen Flotte getränkt, die aus einer Verdünnung der jeweiligen Emulsion in entionisiertem Wasser bestand. Der getränkte Stoff wurde in einem Zweiwalzenfoulard auf 100 % Flottenaufnahme abgequetscht. Die Mengen waren so gewählt, dass 0,4 % Aktivsubstanz aufgenommen wurden. Unter Aktivsubstanz wird die Gesamtmenge aus Polyethersiloxan und der jeweiligen Siloxane aus den Beispielen 5 und 6 bzw. den Vergleichsbeispielen 1 und 2 bzw. der organischen Weichmacher Dilasoft KPL bzw. Distearoylethylhydroxyethylmethylammonium-Methosulfat verstanden. Die Stoffmuster wurden 10 min bei 130°C getrocknet. Anschließend wurde ein Stoffstück von 80 g Gewicht herausgeschnitten, an dem die folgenden Prüfungen durchgeführt wurden. Dieses Stoffstück wurde zur Vorbereitung auf die Untersuchungen für 14 Stunden bei einer Temperatur von 23°C und einer Luftfeuchtigkeit von 50 % gelagert.

### Bestimmung der Waschfestigkeit

Nach der ersten Beurteilung des Weichgriffs und der Wassereinsinkzeit wurden Frotteemuster jeweils zehn Mal gewaschen. Die Wäsche erfolgte in einer Trommelwaschmaschine der Fa. AEG mit einem Waschprogramm für Buntwäsche bei 60°C. Als Waschmittel wurden 50 g eines kompakten, handelsüblichen Waschpulvergranulats der Fa. Henkel ohne Zusatz von Weichspülern verwendet. An den Waschgang schloss sich ein Schleuderschritt bei 1200 U/min an. Die Muster wurden danach auf einer Wäscheleine luftgetrocknet und anschließend zur Akklimatisation 14 Stunden bei einer Temperatur von 23°C und einer Luftfeuchtigkeit von 50 % gelagert. Der Weichgriff und die Wassereinsinkzeit wurden nach der Ausrüstung der Stoffmuster und nach der zehnten Wäsche bestimmt.

### Bestimmung des Weichgriffs

10 Testpersonen beurteilten den Weichgriff des ausgerüsteten Frotteestoffs nach subjektivem Empfinden und vergaben in Abhängigkeit von der Anzahl n der zu prüfenden Muster 1 bis n Punkte nach dem Schulnotenprinzip, wobei 1 Punkt für das weichste und n Punkte für das Muster mit den schlechtesten Griffeigenschaften vergeben wurden. In der Tabelle sind die Durchschnittswerte der jeweils für die einzelnen Muster vergebenen Noten angegeben.

### Bestimmung der Wassereinsinkzeit

Die Bestimmung der Wassereinsinkzeit erfolgte immer vor der Beurteilung des Weichgriffs an unter Normbedingungen akklimatisierten Stoffmustern. Dazu wurde ein 50 µl großer Tropfen entionisiertes Wasser aus einer Höhe von 3 mm auf die Stoffoberfläche gegeben und mit Hilfe einer Stoppuhr die Zeit bestimmt bis der Wassertropfen vom Stoff aufgesaugt war. Die in Tabelle 1 angegebenen Wassereinsinkzeiten sind die Mittelwerte von fünf Einzelbestimmungen der Wassereinsinkzeit.

In Tabelle 1 und 2 sind die mit den Emulsionen VE1, VE2, VE3, VE4, E1 und E2 erzielten Ergebnisse der mit Foulardverfahren ausgerüsteten Frotteemuster zusammengefasst.

**Tabelle 1. Wassereinsinkzeit in Sekunden**

| **Wäsche** | **VE1** | **VE2** | **VE3** | **VE4** | **E1** | **E2** |
|---|---|---|---|---|---|---|
| **0** | 7s | 5s | 8s | >120s | 8s | 7s |
| **10** | 0,5s | 0s | 0s | 32s | 3s | 9s |

**Tabelle 2. Bestimmung des durchschnittlichen Weichgriffs**

| **Wäsche** | **VE1** | **VE2** | **VE3** | **VE4** | **E1** | **E2** |
|---|---|---|---|---|---|---|
| **0** | 3,5 | 2,7 | 6,0 | 4,5 | 2,3 | 2,0 |
| **10** | 4,3 | 4,6 | 5,8 | 3,1 | 1,5 | 1,7 |

## Patentansprüche

1. Derivatisierte, permanent quaternierte Stickstoffatome aufweisende, geradkettige oder verzweigte aminofunktionelle Organopolysiloxane enthaltend
a) mindestens eine Siloxaneinheit der allgemeinen Formel
Rₐ(RO)_{b}U_{c}SiO_{[4-(a+b+c)]/2}
**dadurch gekennzeichnet, dass** der Rest U ein organischer Rest ist, der gleich oder verschieden ist und eine oder mehrere Aminogruppen aufweist, wobei mindestens eine Aminogruppe einen Substituenten R¹ trägt, wobei R¹ gleich oder verschieden ist und der allgemeinen Formel -M-D-(M-A-M-D)ₘ-M-E entspricht,
R gleich oder verschieden ist und einen einwertigen, gegebenenfalls halogenierten Kohlenwasserstoffrest mit 1 bis 18 Kohlenstoffatomen je Rest bedeutet,
M gleich oder verschieden ist und ein zweiwertiger, geradkettiger, verzweigter oder cyclischer Kohlenwasserstoffrest mit mindestens 4. Kohlenstoffatomen ist, der mindestens eine Hydroxylgruppe aufweist, über eine Si-C Bindung an ein Siliciumatom gebunden ist und in der Kohlenstoffatomkette ein oder mehrere Sauerstoffatome aufweisen kann,
E gleich oder verschieden ist und ausgewählt ist aus den Gruppen 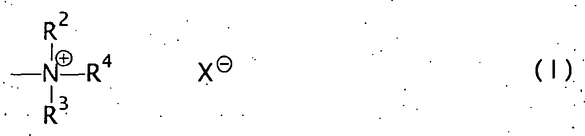 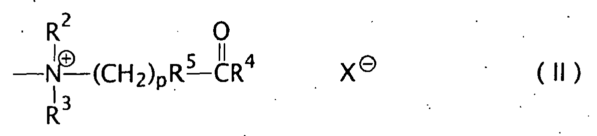 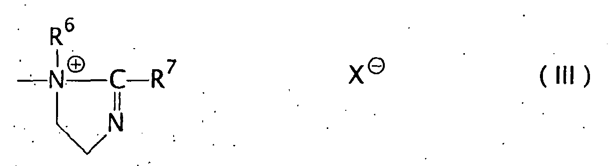 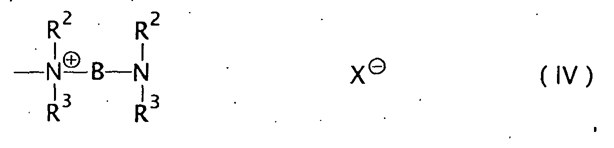 A gleich oder verschieden ist und ausgewählt ist aus den Gruppen 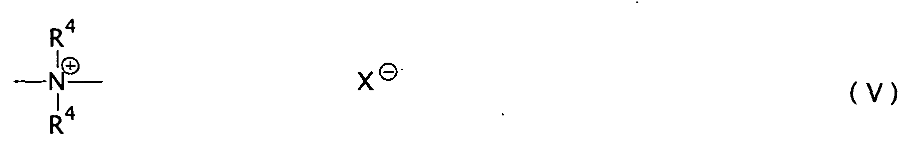 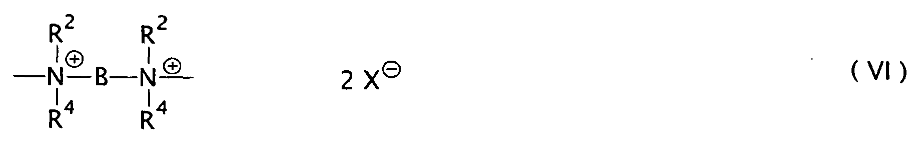 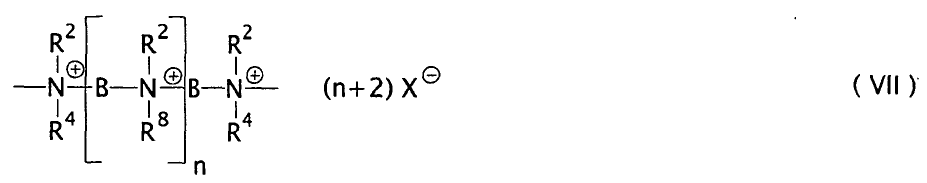 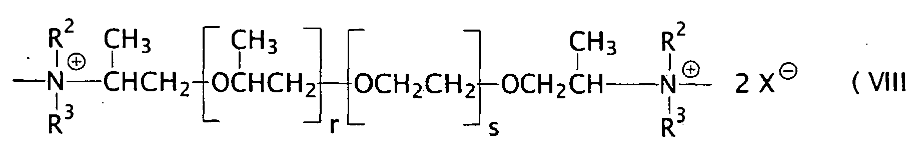 D gleich oder verschieden ist und zweiwertige Reste der allgemeinen Formel (IX) oder zweiwertige Kohlenwasserstoffreste mit 2 bis 30 Kohlenstoffatomen, die von Sauerstoffatomen unterbrochen sein können, bedeutet, wobei R wie zuvor definiert ist und mindestens ein Rest D in den Substituenten R¹ die Bedeutung der allgemeinen Formel (IX) hat, 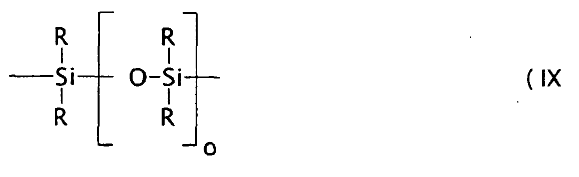 die Reste R² und R³ ein Wasserstoffatom oder gleiche oder verschiedene, einwertige Alkylreste mit 1 bis 30 Kohlenstoffatomen, Alkenylreste mit 2 bis 30 Kohlenstoffatomen, Aryl-CH₂-Reste mit 7 bis 15 Kohlenstoffatomen sind oder jeweils Bestandteil eines verbrückenden Alkylenrestes sind, wobei sowohl die Alkyl- als auch die Alkenylreste Hydroxylgruppen aufweisen können und die Alkylreste von Sauerstoffatomen oder Schwefelatomen unterbrochen sein können,
R⁴ gleich oder verschieden ist und ein einwertiger Alkylrest mit 1 bis 30 Kohlenstoffatomen oder ein Alkenylrest mit 2 bis 30 Kohlenstoffatomen ist, wobei sowohl die Alkyl- als auch die Alkenylreste Hydroxylgruppen aufweisen können,
R⁵ gleich oder verschieden ist und ein -O- oder -NR⁹-Rest ist, wobei R⁹ ein Alkyl- oder Hydroxyalkylrest mit 1 bis 4 Kohlenstoffatomen oder ein Wasserstoffatom ist,
R⁶ und R⁷ gleiche oder verschiedene einwertige Alkylreste mit 1 bis 30 Kohlenstoffatomen sind, wobei die Alkylreste Hydroxylgruppen aufweisen können;
R⁸ die Bedeutung des Restes R⁴ hat oder ein Rest M-D-(M-A-M-D)ₘ-M-E ist,
B ein zweiwertiger Kohlenwasserstoffrest mit mindestens 2 Kohlenstoffatomen ist, der eine Hydroxylgruppe aufweisen und in der Kohlenstoffkette ein oder mehrere Sauerstoff- oder Stickstoffatome aufweisen kann,
X⁻ ein organisches oder anorganisches Anion ist,
a gleich 0, 1, 2 oder 3 ist,
b gleich 0,1, 2 oder 3 ist,
c gleich 1, 2 oder 3 ist,
mit der Maßgabe, dass die Summe a+b+c ≤ 3 ist,
m eine Zahl von 0 bis 50 ist,
n eine Zahl von 1 bis 10,
o eine Zahl von 1 bis 250,
p eine Zahl von 2 bis 8,
r eine Zahl von 0 bis 100, und
s eine Zahl von 0 bis 100 ist, und
b) mindestens eine Siloxaneinheit der allgemeinen Formel
Rₐ(RO)_{b}SiO_{[4-(a+b)]/2}
wobei R, a und b die oben angegebene Bedeutung haben, mit der Maßgabe, dass die Summe a + b ≤ 3 ist.

2. Organopolysiloxane nach Anspruch 1, **dadurch gekennzeichnet, dass** in mindestens einer weiteren Siloxaneinheit vom Typ (a) der Substituent R¹ die Bedeutung der allgemeinen Formeln -M-SiRₜ(OR¹¹)₍₃₋ₜ₎ oder -M-D-(M-A-M-D)ₘ-M-A-M-SiRₜ(OR¹¹)₍₃₋ₜ₎ hat, wobei M, D, A, m und R wie in Anspruch 1 definiert sind, R¹¹ ein einwertiger, geradkettiger oder verzweigter Alkylrest mit 1 bis 10 Kohlenstoffatomen, der gleich oder verschieden sein kann, und t = 0, 1 oder 2 ist.

3. Organopolysiloxane nach Anspruch 1 oder 2, **dadurch gekennzeichnet, dass** die Reste R² und R³ gleiche oder verschiedene, einwertige Alkylreste mit 1 bis 30 Kohlenstoffatomen, Alkenylreste mit 2 bis 30 Kohlenstoffatomen, Aryl-CH₂-Reste mit 7 bis 15 Kohlenstoffatomen sind oder jeweils Bestandteil eines verbrückenden Alkylenrestes sind, wobei sowohl die Alkyl- als auch die Alkenylreste Hydroxylgruppen aufweisen können und die Alkylreste von Sauerstoffatomen oder Schwefelatomen unterbrochen sein können.

4. Organopolysiloxane nach einem der Ansprüche 1 bis 3, **dadurch gekennzeichnet, dass** im Rest M das mit der Hydroxylgruppe substituierte Kohlenstoffatom sich in unmittelbarer Nachbarstellung zu einem Kohlenstoffatom befindet, das durch eine Einfachbindung an ein Stickstoffatom gebunden ist,
B ein zweiwertiger Kohlenwasserstoffrest der Formel-(CH₂)₂- oder -(CH₂)₃- ist,
m eine Zahl von 1 bis 20 ist,
n eine Zahl von 1 bis 5 ist,
o eine Zahl von 6 bis 120 ist,
p eine Zahl von 2 bis 6 ist,
r eine Zahl von 1 bis 25 ist,
s eine Zahl von 1 bis 25, und
t gleich 0 ist.

5. Organopolysiloxane nach einem der Ansprüche 1, 2, 3 oder 4, **dadurch gekennzeichnet, dass**
a) in den Siloxaneinheiten der allgemeinen Formel
Rₐ(RO)_{b}U_{c}SiO_{[4-(a+b+c)]/2}
a, b und c so gewählt sind, dass im Mittel die Summe a+b+c≥ 1,8 und ≤ 2,2 ist, und
b) in den Siloxaneinheiten der allgemeinen Formel
Rₐ(RO)_{b}SiO_{[4-(a+b)]/2}
a und b so gewählt sind, dass im Mittel die Summe a+b ≥ 1,8 und ≤ 2,2 ist,
M ausgewählt ist aus Kohlenwasserstoffresten der Formeln 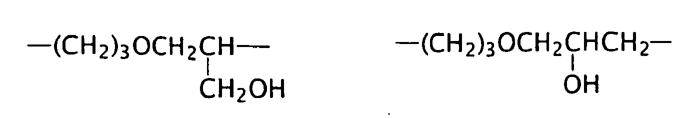 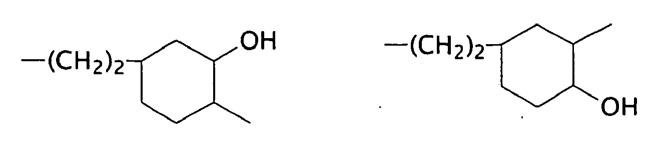 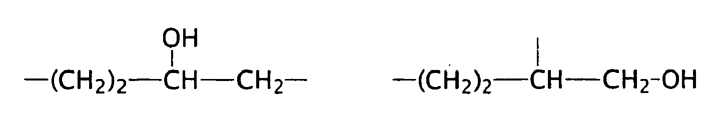 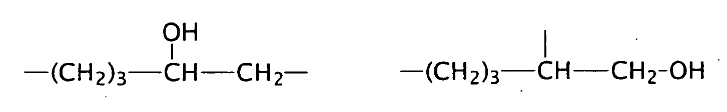 , m eine Zahl von 1 bis 10, und
o eine Zahl von 20 bis 100 ist.

6. Verfahren zur Herstellung eines Organopolysiloxans nach einem der Ansprüche 1 und 3 bis 5, **dadurch gekennzeichnet, dass** in geeigneten molaren Verhältnissen
a) gleiche oder verschiedene Organopolysiloxane enthaltend
mindestens eine Struktureinheit der allgemeinen Formel (X)
Rₐ(RO)_{b}U'_{c}SiO_{[4-(a+b+c)]/2} (X),
wobei U' ein organischer Rest ist, der gleich oder verschieden ist und eine oder mehrere Aminogruppen aufweist, wobei mindestens eine der Aminogruppen einen bzw. einen weiteren Substituenten aufnehmen kann, und
mindestens eine Struktureinheit der allgemeinen Formel (XX)
Rₐ(RO)_{b}SiO_{[4-(a+b)]/2} (XX),
mit
b) gleichen oder verschiedenen Organopolysiloxanen der allgemeinen Formel (XI)
ZR₂SiO-[R₂SiO]₍ₒ₋₁₎-SiR₂Z (XI),
und gegebenenfalls gleichen oder verschiedenen difunktionellen Epoxiden der allgemeinen Formel (XXI)
Y-R¹²-Y (XXI),
und mit
c) gleichen oder verschiedenen Aminen der allgemeinen Formeln (XII), (XIII), (XIV), (XV) 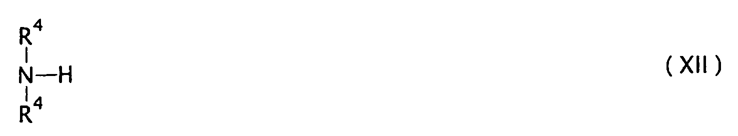 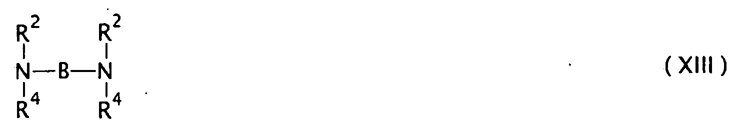 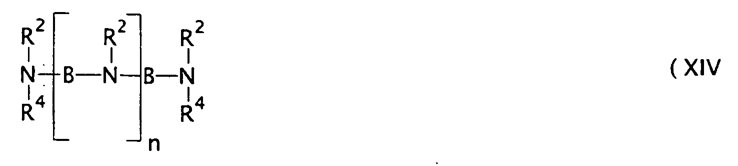 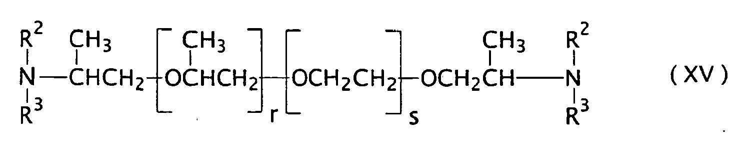 und gegebenenfalls mit
d) mindestens einem der weiteren Amine der allgemeinen Formeln (XVI), (XVII), (XVIII), (XIX) 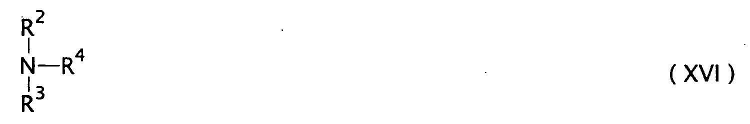 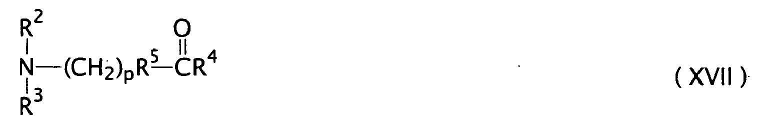 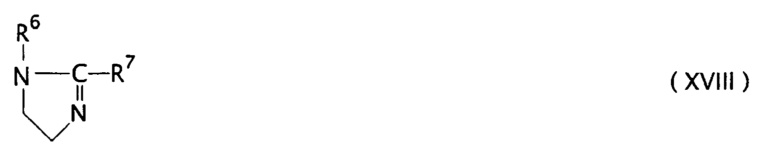 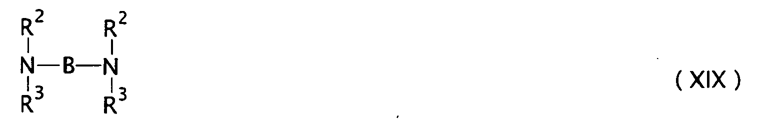 und mit
e) gleichen oder verschiedenen Säuren der allgemeinen Formel HX diskontinuierlich oder kontinuierlich, gleichzeitig oder schrittweise, umgesetzt werden, wobei
Y gleich oder verschieden ist, und ein einwertiger Kohlenwasserstoffrest mit mindestens 3 Kohlenstoffatomen ist, der eine Epoxygruppe enthält und über ein Sauerstoffatom an R¹² gebunden sein kann,
Z gleich oder verschieden ist, und ein einwertiger, SiC-gebundener, geradkettiger oder verzweigter Kohlenwasserstoffrest mit mindestens 4 Kohlenstoffatomen ist, der in der Kohlenstoffatomkette ein Sauerstoffatom aufweisen kann und eine Epoxygruppe enthält,
die Reste R, R², R³, R⁴, R⁵, R⁶ und R⁷ sowie B und a, b, c, n, o, p, r und s wie in Anspruch 1 definiert sind,
R¹² gleich oder verschieden ist und ein Sauerstoffatom oder eine geradkettige, verzweigte oder cyclische Alkylengruppe mit 2 bis 30 Kohlenstoffatomen, die gegebenenfalls durch Sauerstoffatome unterbrochen sein kann, ist,
HX eine organische oder anorganische Säure ist.

7. Verfahren nach Anspruch 6, **dadurch gekennzeichnet, dass** zur Herstellung eines Organopolysiloxans wie in Anspruch 2 definiert in einem geeigneten molaren Verhältnis die monomere Siliciumverbindung Z-SiRₜ(OR¹¹)₍₃₋ₜ₎ an der Reaktion teilnimmt, wobei R¹¹, Z und t wie in Anspruch 2 bzw. Anspruch 6 definiert sind.

8. Organopolysiloxane, herstellbar nach dem Verfahren gemäß den Ansprüchen 6 oder 7.

9. Zubereitungen enthaltend mindestens ein Organopolysiloxan gemäß einem der Ansprüche 1 bis 5 oder 8 oder hergestellt gemäß einem der Ansprüche 6 oder 7.

10. Verwendung von Zubereitungen gemäß Anspruch 9 zur Weichgriffausrüstung von Textilien, als Prozesshilfsmittel zur Herstellung oder zur Beschichtung von natürlichen oder synthetischen Fasern, in Wasch- und Reinigungsmitteln, in Polituren und Pflegemitteln zur Behandlung harter Oberflächen, zur Beschichtung und Trocknung von Lackoberflächen von Automobilen, als Korrosionsinhibitoren und zur Haut- und Haarpflege.

## Claims

1. Derivatised, permanently quaternized nitrogen atom-containing straight chained or branched aminofunctional organopolysiloxane comprising
a) at least one siloxane unit of the general formula
Rₐ(RO)_{b}U_{c}SiO_{[4-(a+b+c)]/2}
**characterised in that** the group U is an organic group that is the same or different and possesses one or a plurality of amino groups, wherein at least one amino group carries a substituent R¹, wherein R¹ is the same or different and corresponds to the general formula -M-D-(M-A-M-D)ₘ-M-E,
R is the same or different and means a monovalent, optionally halogenated hydrocarbon group containing 1 to 18 carbon atoms in each group, M is the same or different and is a divalent, straight chained, branched or cyclic hydrocarbon group containing at least 4 carbon atoms, which possesses at least one hydroxyl group, is bonded through an Si-C bond to a silicon atom and can possess one or a plurality of oxygen atoms in the chain of carbon atoms,
E is the same or different and is selected from the groups 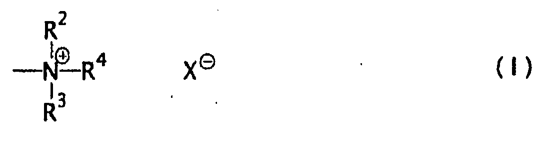 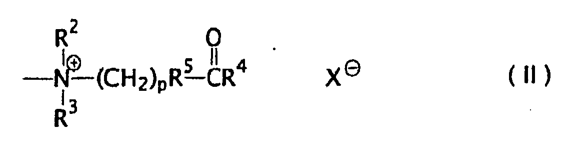 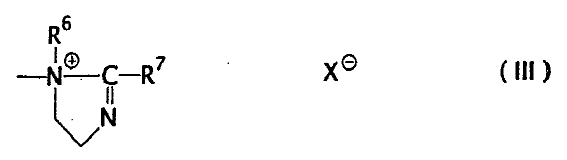 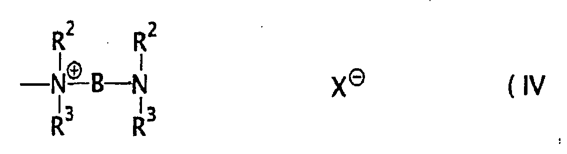 A is the same or different and is selected from the groups 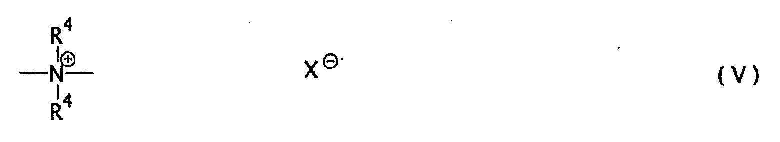 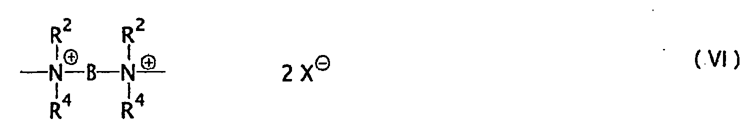 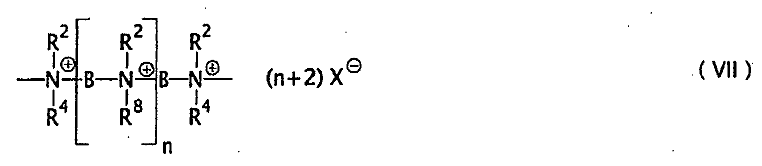 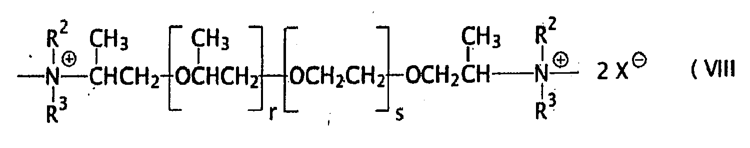 D is the same or different and means divalent groups of the general formula (IX) or divalent hydrocarbon groups containing 2 to 30 carbon atoms that can be interrupted by oxygen atoms, wherein R is as previously defined and at least one group D in the substituents R¹ has the meaning of the general formula (IX), 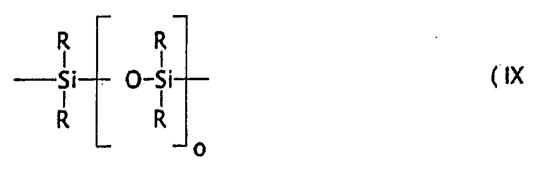 the groups R² and R³ are a hydrogen atom or the same or different monovalent alkyl groups containing 1 to 30 carbon atoms, alkenyl groups containing 2 to 30 carbon atoms, aryl-CH₂ groups containing 7 to 15 carbon atoms or are each components of a bridging alkylene group, wherein both the alkyl and the alkenyl groups can also possess hydroxyl groups and the alkyl groups can be interrupted by oxygen atoms or sulfur atoms,
R⁴ is the same or different and is a monovalent alkyl group containing 1 to 30 carbon atoms or an alkenyl group containing 2 to 30 carbon atoms, wherein both the alkyl and the alkenyl groups can also possess hydroxyl groups,
R⁵ is the same or different and is an -O- or -NR⁹ group, wherein R⁹ is an alkyl or hydroxyalkyl group containing 1 to 4 carbon atoms or is a hydrogen atom,
R⁶ and R⁷ are the same or different monovalent alkyl groups containing 1 to 30 carbon atoms, wherein the alkyl groups can possess hydroxyl groups,
R⁸ has the meaning of the R⁴ group or is an M-D-(M-A-M-D)ₘ-M-E group,
B is a divalent hydrocarbon group containing at least 2 carbon atoms that possess a hydroxyl group, and can possess one or a plurality of oxygen atoms or nitrogen atoms in the carbon chain,
X⁻ is an organic or inorganic anion,
a is equal to 0,1, 2 or 3,
b is equal to 0, 1, 2 or 3,
c is equal to 1, 2 or 3,
with the proviso that the sum of a+b+c is < 3,
m is a number from 0 to 50,
n is a number from 1 to 10,
o is a number from 1 to 250,
p is a number from 2 to 8,
r is a number from 0 to 100, and
s is a number from 0 to 100, and
b) at least one siloxane unit of the general formula
Rₐ(RO)_{b}SiO_{[4-(a+b)]/2}
wherein R, a and b have the above meaning, with the proviso that the sum of a + b is ≤3.

2. Organopolysiloxane according to Claim 1, **characterised in that** in at least one additional siloxane unit of type (a) the substituent R¹ has the meaning of the general formulae -M-SiRₜ(OR¹¹)₍₃₋ₜ₎ or -M-D-(M-A-M-D)ₘ-M-A-M-SiRₜ(OR¹¹)₍₃₋ₜ₎, wherein M, D, A, m and R are as defined in claim 1, R¹¹ can be a monovalent, straight chain or branched alkyl group containing 1 to 10 carbon atoms, which can be the same or different, and t = 0, 1 or 2.

3. Organopolysiloxanes according to Claim 1 or 2, **characterised in that** the groups R² and R³ are the same or different monovalent alkyl groups containing 1 to 30 carbon atoms, alkenyl groups containing 2 to 30 carbon atoms, aryl-CH₂- groups containing 7 to 15 carbon atoms or are each a component of a bridging alkylene group, wherein both the alkyl and the alkenyl groups can also possess hydroxyl groups and the alkyl groups can be interrupted by oxygen atoms or sulfur atoms.

4. Organopolysiloxanes according to one of Claims 1 to 3, **characterised in that** the hydroxyl group-substituted carbon atom in the group M is in the immediate neighbourhood of a carbon atom bonded through a single bond to a nitrogen atom,
B is a divalent hydrocarbon rest of the formula -(CH₂)₂- or -(CH₂)₃-,
m is a number from 1 to 20,
n is a number from 1 to 5,
o is a number from 6 to 120,
p is a number from 2 to 6,
r is a number from 1 to 25,
s is a number from 1 to 25, and
t is equal to 0.

5. Organopolysiloxanes according to one of Claims 1, 2, 3 or 4, **characterised in that**
a) in the siloxane units of the general formula
Rₐ(RO)_{b}U_{c}SiO_{[4-(a+b+c)]/2},
a, b and c are chosen such that on average the sum of a+b+c ≥ 1.8 and ≤ 2.2, and
b) in the siloxane units of the general formula
Rₐ(RO)_{b}SiO_{[4-(a+b)]/2} ,
a and b are chosen in such a way that on average, the sum of a+b ≥ 1.8 and ≤ 2.2,
M is selected from hydrocarbon groups of the formulae 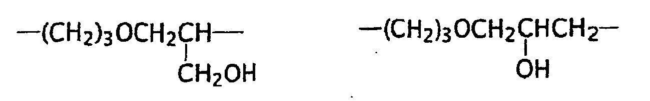 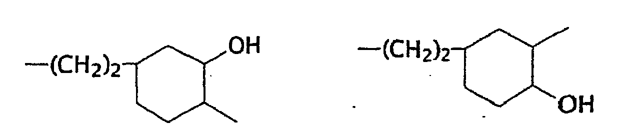 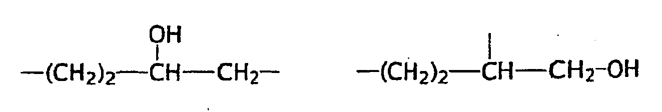 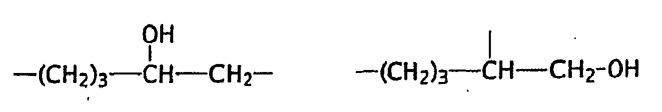 m is a number from 1 to 10, and
o is a number from 20 to 100.

6. Process for manufacturing an organopolysiloxane according to one of Claims 1 and 3 to 5, **characterised in that** discontinuously or continuously, simultaneously or stepwise, the following are reacted in suitable molar ratios,
a) the same or different organopolysiloxanes comprising at least one structural unit of the general formula (X)
Rₐ(RO)_{b}U_{c}SiO_{[4-(a+b+c)]/2} (X),
wherein U' is an organic group that is the same or different and possesses one or a plurality of amino groups, wherein at least one of the amino groups can carry one or another substituent, and
at least one structural unit of the general formula (XX)
Rₐ(RO)_{b}SiO_{[4-(a+b)]/2} (XX),
with
b) the same or different organopolysiloxanes of the general Formula (XI)
ZR₂SiO-[R₂SiO]₍ₒ₋₁₎-SiR₂Z (XI),
and optionally the same or different difunctional epoxides of the general formula (XXI)
Y-R¹²-Y (XXI),
and with
c) the same or different amines of the general formulae (XII), (XIII), (XIV), (XV) 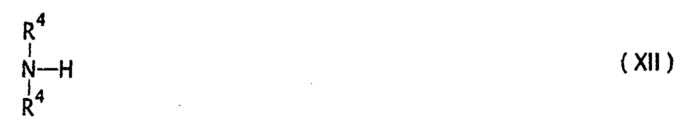 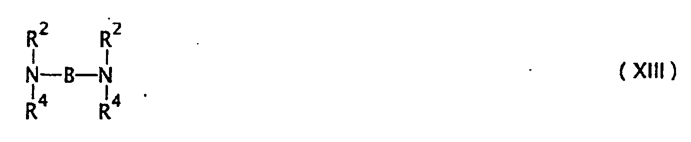 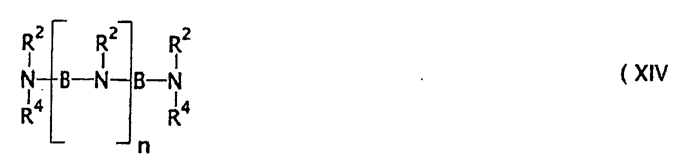 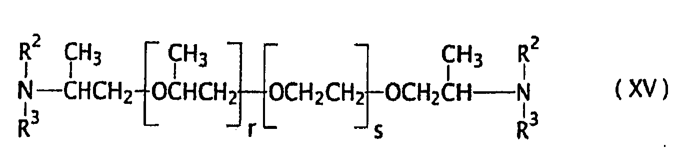 and optionally with
d) at least one of the additional amines of the general formulae,(XVI), (XVII), (XVIII), (XIX) 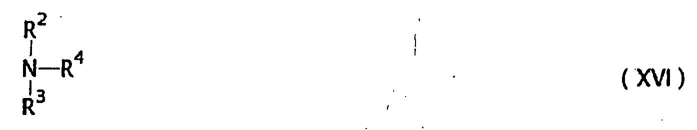 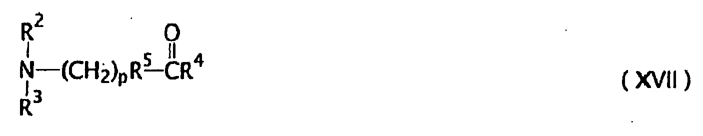 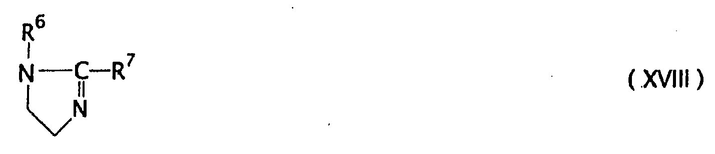 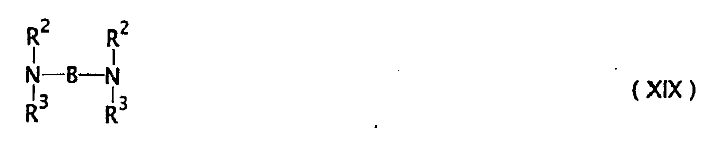 and with
e) the same or different acids of the general formula HX, wherein Y is the same or different, and is a univalent hydrocarbon group containing at least 3 carbon atoms, which comprises an epoxy group and can be bonded through an oxygen atom to R₁₂,
Z is the same or different, and is a univalent, straight chain or branched, SiC-bonded hydrocarbon group containing at least 4 carbon atoms, which can include an oxygen atom in the carbon chain and comprises an epoxy group, the groups R, R², R³, R⁴, R⁵, R⁶and R as well as B and a, b, c, n, o, p, r and s are as defined in Claim 1,
R¹² is the same or different and is an oxygen atom or a straight chain,
branched or cyclic alkylene group containing 2 to 30 carbon atoms, which can be optionally interrupted by oxygen atoms,
HX is an organic or inorganic acid.

7. Process according to Claim 6, **characterised in that** for manufacturing an organopolysiloxane as in Claim 2, the monomeric silicon compound Z-SiRₜ(OR¹¹)₍₃₋ₜ₎ takes part in the reaction in an appropriate molar ratio, wherein R¹¹, Z and t are as defined in Claim 2.

8. Organopolysiloxanes, manufacturable according to the process according to Claims 6 or 7.

9. Preparation comprising at least one organopolysiloxane according to one of Claims 1 to 5 or 8 or manufactured according to one of Claims 6 or 7.

10. Use of a preparation according to Claim 9 for providing a soft feel to fabrics, as a process aid for the manufacture or for the coating of natural or synthetic fibres, in detergents and cleaning agents, in polishes and conditioners for treating hard surfaces, for coating and drying paint surfaces of automobiles, as corrosion inhibitors and for skin care and hair care.

## Revendications

1. Organopolysiloxanes à fonctions amino, dérivatisés, linéaires ou ramifiés, présentant des atomes d'azote quaternisés de manière permanente et qui contiennent
a) au moins une unité siloxane de formule générale :
Rₐ(RO)_{b}U_{c}SiO_{[4-(a+b+c)]/2}
**caractérisée en ce que** le résidu U est un résidu organique qui est identique ou différent et comporte un ou plusieurs groupes amino, parmi lesquels au moins un groupe amino porte un substituant R¹, R¹ étant identique ou différent et répondant à la formule générale -M-D-(M-A-M-D)ₘ-M-E,
R est identique ou différent et désigne un résidu hydrocarboné monovalent, éventuellement halogéné, avec 1 à 18 atomes de carbone par résidu,
M est identique ou différent et désigne un résidu hydrocarboné divalent, linéaire, ramifié ou cyclique, possédant au moins 4 atomes de carbone, qui comporte au moins un groupe hydroxyle, est lié à un atome de silicium par une liaison Si-C et peut présenter un ou plusieurs atomes d'oxygène dans le squelette d'atomes de carbone,
E est identique ou différent et est choisi parmi les groupes : 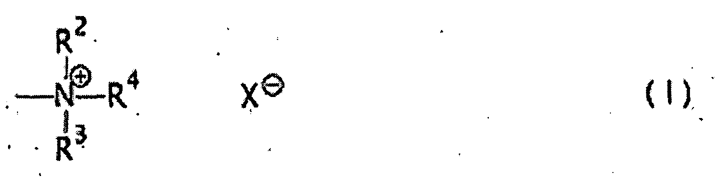 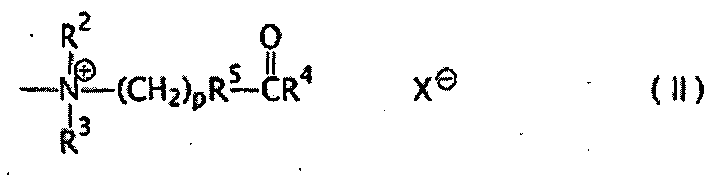 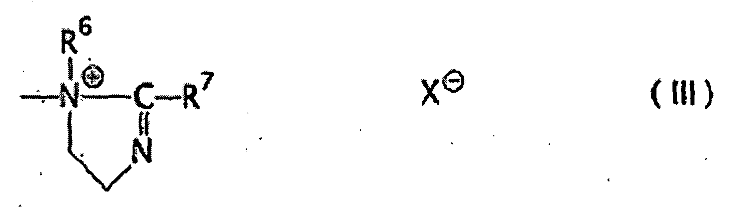 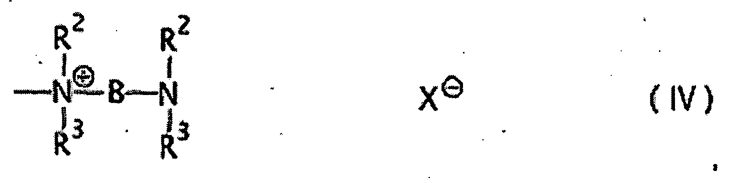 A est identique ou différent et est choisi parmi les groupes : 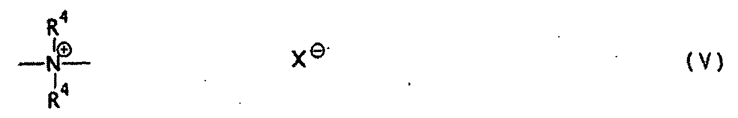 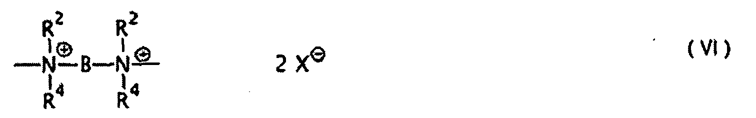 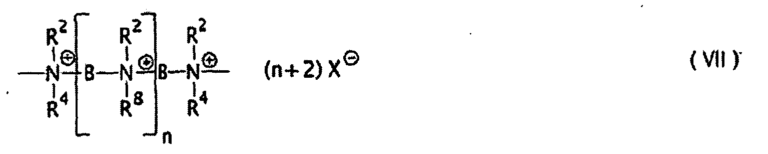 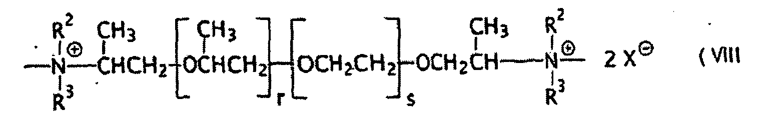 D est identique ou différent et désigne des résidus divalents de formule générale (IX) ou des résidus hydrocarbonés divalents possédant 2 à 30 atomes de carbone qui peuvent être interrompus par des atomes d'oxygène, dans lesquels R est défini comme précédemment et au moins un résidu D dans les substituants R¹ a la signification de la formule générale (IX) : 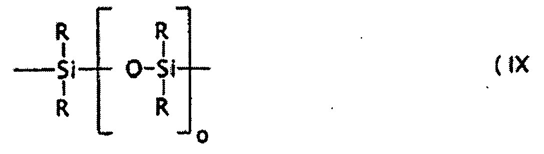 les résidus R² et R³ désignent un atome de carbone ou des résidus alkyle monovalents identiques ou différents possédant 1 à 30 atomes de carbone, des résidus alcényle possédant 2 à 30 atomes de carbone, des résidus aryle-CH₂ possédant 7 à 15 atomes de carbone ou, à chaque fois, un constituant d'un résidu alkylène formant un pont, les résidus alkyle et alcényle pouvant chacun comporter des groupes hydroxyle et les résidus alkyle pouvant être interrompus par des atomes d'oxygène ou de soufre,
R⁴ est identique ou différent et est un radical alkyle monovalent possédant 1 à 30 atomes de carbone ou un résidu alcényle possédant 2 à 30 atomes de carbone, les résidus alkyle et alcényle pouvant chacun comporter des groupes hydroxyle,
R⁵ est identique ou différent et est un résidu -O- ou -NR⁹-, R⁹ étant un résidu alkyle ou hydroxyalkyle possédant 1 à 4 atomes de carbone ou un atome d'hydrogène,
R⁶ et R⁷ sont des résidus alkyle monovalents identiques ou différents, possédant 1 à 30 atomes de carbone, les résidus alkyle pouvant comporter des groupes hydroxyle,
R⁸ a la signification du résidu R⁴ ou est un résidu M-D-(M-A-M-D)ₘ-M-E,
B est un résidu de carbone divalent possédant au moins 2 atomes de carbone, comportant un groupe hydroxyle et pouvant présenter un ou plusieurs atomes d'oxygène ou d'azote dans la chaîne de carbone,
X est un anion organique ou inorganique,
avaut0, 1,2ou3,
b vaut 0, 1, 2 ou 3,
c vaut 1, 2 ou 3,
avec comme condition que la somme a+b+c est ≤ 3,
m est un nombre de 0 à 50,
n un nombre de 1 à 10,
o un nombre de 1 à 250,
p un nombre de 2 à 8,
r un nombre de 0 à 100 et
s un nombre de 0 à 100, et
b) au moins une unité siloxane de formule générale :
Rₐ(RO)_{b}SiO_{[4-(a+b)]/2}
dans laquelle R, a et b ont la signification précitée, avec comme condition que la somme a+b+c est ≤ 3.

2. Organopolysiloxanes selon la revendication 1, **caractérisés en ce que**, dans au moins une autre unité siloxane du type (a), le substituant R¹ a la signification des formules générales -M-SiRₜ(OR¹¹)₍₃₋ₜ₎ ou M-D-(M-A-M-D)ₘ-M-A-M-SiRₜ(OR¹¹)₍₃₋ₜ₎, M, D, A, m et R étant définis comme dans la revendication 1, R¹¹ étant un résidu alkyle monovalent, linéaire ou ramifié, possédant 1 à 10 atomes de carbone qui peut être identique ou différent et t=0, 1 ou 2.

3. Organopolysiloxanes selon la revendication 1 ou 2, **caractérisé en ce que** les résidus R² et R³ sont des résidus alkyle monovalents, identiques ou différents, possédant 1 à 30 atomes de carbone, des résidus alcényle possédant 2 à 30 atomes de carbone, des résidus aryl-CH₂ possédant 7 à 15 atomes de carbone, ou sont, à chaque fois, un constituant d'un résidu alkylène formant un pont, les résidus alkyle et alcényle pouvant chacun comporter des groupes hydroxyle et les résidus alkyle pouvant être interrompus par des atomes d'oxygène ou de soufre.

4. Organopolysiloxanes selon l'une quelconque des revendications 1 à 3, **caractérisés en ce que**, dans le résidu M, l'atome de carbone substitué par le groupe hydroxyle se trouve en position directement adjacente à un atome de carbone qui est lié à un atome d'azote par une liaison simple,
B est un résidu d'hydrocarbure divalent de formule -(CH₂)₂- ou -(CH₂)₃-,
m est un nombre de 1 à 20,
n un nombre de 1 à 5,
o un nombre de 6 à 120,
p un nombre de 2 à 6,
r un nombre de 1 à 25 et
s un nombre de 1 à 25, et
t vaut 0.

5. Organopolysiloxanes selon l'une quelconque des revendications 1, 2 , 3 ou 4, **caractérisés en ce que**
a) dans les unités siloxane de formule générale :
Rₐ(RO)_{b}U_{c}SiO_{[4-(a+b)]/2}
a, b, c sont choisis de manière qu'en moyenne, la somme a+b+c soit ≥ 1,8 et ≤ 2,2 et
b) dans les unités siloxane de formule générale :
Rₐ(RO)_{b}SiO_{[4-(a+b)]/2}
a et b sont choisis de manière qu'en moyenne, la somme a+b soit ≥ 1,8 et ≤ 2,2,
M est choisi dans les résidus d'hydrocarbures de formules : 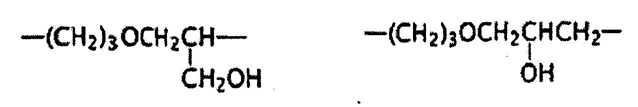 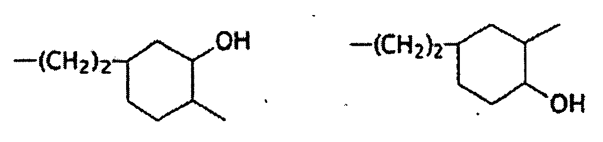 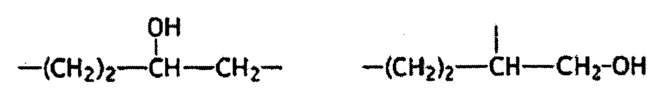 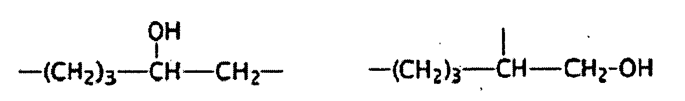 m est un nombre de 1 à 10, et
o un nombre de 20 à 100.

6. Procédé pour la fabrication d'un organopolysiloxane selon l'une quelconque des revendications 1 et 3 à 5, **caractérisé en ce qu'**on fait réagir, dans des rapports molaires appropriés, en discontinu ou en continu, simultanément ou progressivement :
a) des organopolysiloxanes identiques ou différents contenant
au moins une unité structurelle de formule générale (X) :
Rₐ(RO)_{b}U'_{c}SiO_{[4-(a+b+c)]/2} (X),
U' étant un résidu organique qui est identique ou différent et qui comporte un ou plusieurs groupes amino, dans lesquels un des groupes amino peut recevoir l'un ou l'autre substituant, et
au moins une unité structurelle de formule générale (XX) :
Rₐ(RO)_{b}SiO_{[4-(a+b)]/2} (XX),
avec
b) des organopolysiloxanes identiques ou différents de formule générale (XI) :
ZR₂SiO-[R₂SiO]₍₀₋₁₎-SiR₂Z (XI),
et éventuellement des époxydes bifonctionnels identiques ou différents de formule générale (XXI) :
Y-R¹²-Y (XXI),
et avec
c) des amines identiques ou différentes de formules générales (XII), (XIII), (XIV), (XV): 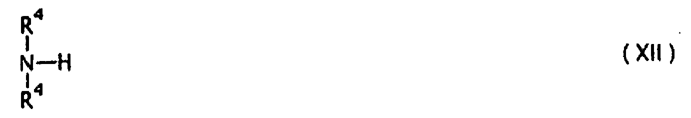 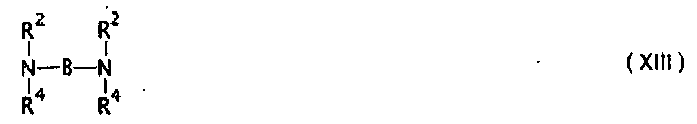 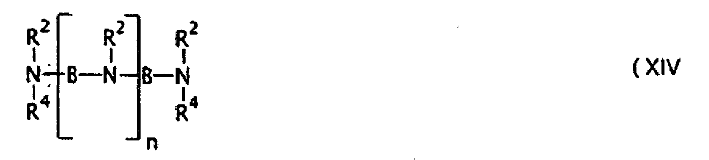 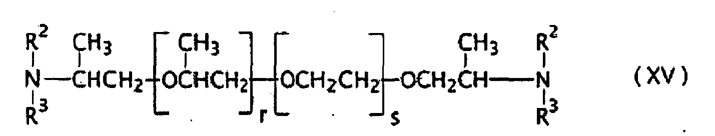 et éventuellement avec
d) au moins une des autres amines de formules générales (XVI), (XVII), (XVIII), (XIX) : 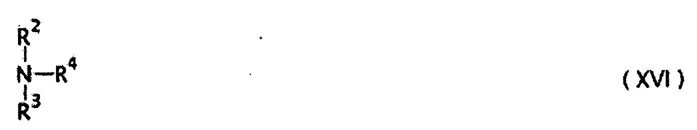 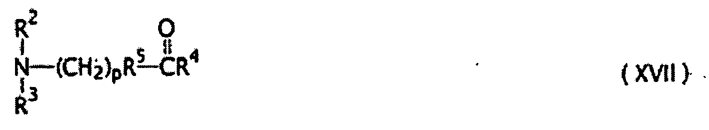 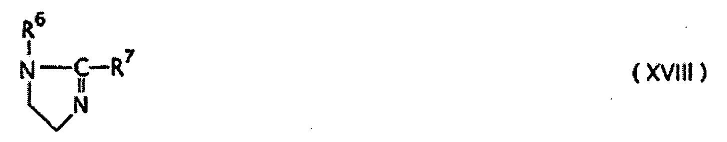 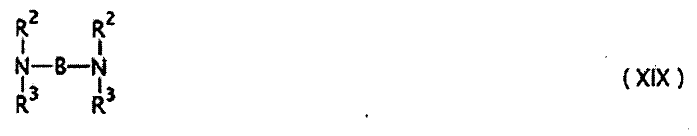 et avec
e) des acides identiques ou différents de formule générale HX, où
Y est identique ou différent et un résidu hydrocarboné monovalent possédant au moins 3 atomes de carbone, qui contient un groupe époxy et qui peut être lié à R¹² via un atome d'oxygène,
Z est identique ou différent et un résidu hydrocarboné monovalent, lié à SiC, linéaire ou ramifié, possédant au moins 4 atomes de carbone, qui peut présenter un atome d'oxygène dans le squelette d'atomes de carbone et contient un groupe époxy,
les résidus R, R², R³, R⁴, R⁵, R⁶ et R⁷ ainsi que B et a, b, c, n, o, p, r et s sont tels que définis dans la revendication 1,
R¹² est identique ou différent et représente un atome d'oxygène ou un groupe alkylène linéaire, ramifié ou cyclique possédant 2 à 30 atomes de carbone, qui peut éventuellement être interrompu par des atomes d'oxygène,
HX est un acide organique ou inorganique.

7. Procédé selon la revendication 6, **caractérisé en ce que**, pour fabriquer un organopolysiloxane tel que défini dans la revendication 2, le composé de silicium monomère Z-SiRₜ(OR¹¹)₍₃₋ₜ₎ participe à la réaction dans un rapport molaire approprié, R¹¹, Z et t étant tels que définis dans la revendication 2 ou 6.

8. Organopolysiloxanes susceptibles d'être obtenus selon le procédé de la revendication 6 ou 7.

9. Préparations contenant au moins un organopolysiloxane selon l'une quelconque des revendications 1 à 5 ou 8 ou fabriqué selon l'une des revendications 6 ou 7.

10. Utilisation de préparations selon la revendication 9 à titre d'adoucissants de textiles, de produits auxiliaires pour la fabrication ou l'enduction de fibres naturelles ou synthétiques, dans les produits de lavage et de nettoyage, dans les vernis et produits d'entretien pour le traitement des surfaces dures, pour l'enduction et le séchage des surfaces vernies des automobiles, comme inhibiteurs de corrosion et pour les soins cutanés et capillaires.
